# EUROPÄISCHE PATENTSCHRIFT

(11) **EP 2 331 006 B1**
(45) Veröffentlichungstag und Bekanntmachung des Hinweises auf die Patenterteilung: **18.04.2012**
(21) Anmeldenummer: 09734633.2
(22) Anmeldetag: 21.04.2009
(51) Int. Cl.: A61C 7/28, A61C 7/30

(54) **KIEFERORTHOPÄDISCHES BRACKET UND ZAHNSPANGE MIT SOLCHEN BRACKETS**
ORTHODONTIC BRACKET, AND BRACE COMPRISING SUCH BRACKETS
ATTACHE ORTHODONTIQUE ET APPAREIL DENTAIRE COMPRENANT CES ATTACHES

(30) Priorität: 21.04.2008 DE 202008005511 U
(43) Veröffentlichungstag der Anmeldung: 15.06.2011
(73) Patentinhaber: Medentic S.A., 6630 Wasserbillig (LU)
(72) Erfinder: SCHMITT, Friedrich, L-6630 Wasserbillig (LU)
(74) Vertreter: Witte, Weller & Partner
(86) Internationale Anmeldenummer: PCT/IB2009/006057
(87) Internationale Veröffentlichungsnummer: WO 2009/130617

(56) Entgegenhaltungen:
- EP-A1- 1 226 791
- EP-A1- 1 332 726
- EP-A1- 1 629 790
- EP-A2- 1 300 118
- WO-A1-94/00072
- US-A- 2 019 773
- US-A- 3 838 514
- US-A- 5 160 260

## Beschreibung

Die Erfindung betrifft ein kieferorthopädisches Bracket, d.h. für kieferorthopädische Anwendungen, nach dem Oberbegriff des Anspruches 1 und eine Zahnspange mit solchen Brackets.

Neben vom Anwender selbst herausnehmbaren und wieder einsetzbaren Zahnspangen gibt es festsitzende Zahnspangen.

Bei den festsitzenden Apparaturen unterscheidet man die intraorale, auf die Zähne aufgebrachte Multiband- oder Multibracketapparatur und die extraoralen Hilfsmitteln. Festsitzende Zahnspangen enthalten Brackets (engl. Halterung), die an einzelnen Zähnen mittels z.B. Bändern oder Kleber angebracht werden und die gemeinsam einen Draht halten, der die eigentliche Spange bzw. das eigentliche Instrument bildet, das die Kräfte zur Zahnregulierung ausübt, und dessen Verformungsdrang somit auf die Zähne zu deren Verstellung wirkt. Herkömmliche Brackets sind blockartig und haben jeweils einen Schlitz, in den der Draht bogenförmig eingelegt wird. Damit der Drahtbogen nicht verrutscht, werden um jedes Bracket über den in seinen Schlitz eingelegten Draht kleine Gummiringe, sog. Alastics, gelegt.

Die verwendeten Materialien der Brackets von intraoralen Multibracketapparaturen (Zahnklammern) reichen von Edelstahl über Titan, Kunststoff bis hin zum zahnfarbenen oder durchsichtigen Keramik- oder Kunststoffbracket.

Die Installation von festsitzenden Apparaturen kann zahlreiche Maßnahmen entsprechend individuellen Vorgaben enthalten, worauf hier nicht weiter eingegangen wird, was dem Fachmann aber ohne weiteres Bekannt ist. Nachfolgend werden Verfahrensschritte soweit angegeben, als sich daraus auch Gestaltungsanforderungen sowie Eigenschaften insbesondere von Brackets ergeben.

Damit der Bracketkleber Halt findet, wird die Zahnoberfläche durch ein spezielles Gel z.B. durch Anätzen aufgeraut. Das ätzende Gel wird durch Wasserspray gründlich entfernt, so dass nur die etwas aufgeraute Zahnoberfläche ohne weitere Zusatzmittel übrig bleibt. Die Brackets werden auf der ebenfalls aufgerauten Rückseite mit schnellwirkendem Klebstoff versehen.

Mit speziellen kieferorthopädischen Positionsinstrumenten wird jedes Bracket auf den entsprechenden Zahn gesetzt. Die Positionierung muss sehr exakt vorgenommen werden, damit die Wirkung des Drahtbogens später optimal ausgenutzt werden kann und keine durch den Kieferorthopäden verursachten Fehler entstehen. Solange der Kleber noch nicht ausgehärtet ist (dies wird in den meisten Fällen durch eine spezielle Lampe beispielsweise mit UV-Licht beschleunigt), kann die Position der Brackets noch geringfügig verändert werden.

Nach dem Einsetzen der Brackets und einer eventuell notwendigen Anzahl an Bändern wird ein erster sehr elastischer Drahtbogen in Röhrchen an den Bändern und in die Brackets gesteckt und mit den kleinen Gummiringen fixiert. Ein solcher Drahtbogen ist Teil einer jeden festen Apparatur und verbindet die einzelnen Zähne und ermöglicht so ihre kontrollierte Verschiebung. Bei späteren Kontrollterminen werden stärkere Drahtbögen eingesetzt, die z.T. dicker sind und z.T. einen anderen Querschnitt aufweisen. Beispielsweise wird dann ein Drahtbogen mit rechteckigem, wie z.B. quadratischem Querschnitt, in den Schlitz im Bracket eingelegt. Die Abmessungen eines solchen rechteckigen Drahtbogen sind dabei so, dass er genau in den Schlitz im Bracket passt. Damit können von dem rechteckigen Drahtbogen Torsionskräfte zur Einstellung von Torque und Angulation am Zahn ausgeübt werden. Stärkere Drahtbögen üben stärkere Kräfte auf die Zähne aus, rufen aber nicht unbedingt stärkere Schmerzen beim Patienten hervor, da der gesamte Kieferapparat bereits an den Druck gewöhnt ist und die Zähne bereits bewegt worden sind.

Nachdem der Drahtbogen eingebaut worden ist, ist die Apparatur einsatzbereit. Während die langwierige Prozedur des Einsetzens von ca. 90 bis 180 min in der Regel nicht schmerzhaft, sondern vielmehr langweilig ist, können in den ersten Tagen danach vor allem beim Kauen je nach körperlicher Empfindsamkeit Schmerzen auftreten. Es können durch die ungewohnten Fremdkörper im Mund auch wunde Stellen an Lippen und Wangen auftreten, die durch ein weiches Wachs aber recht problemlos abzudecken sind. Falls nach wenigen Tagen die Schmerzen nicht verschwunden sind, sollte der Kieferorthopäde eventuell erneut aufgesucht werden, damit die Spange etwas lockerer gestellt wird. Nicht zu unterschätzen ist in einigen Fällen auch die psychische Labilität von Patienten, die sich zunächst mit einem über Jahre im Mund eingebauten Fremdkörper nicht abfinden können und daher unter Umständen besondere psychische Führung benötigen.

Ein wesentliches Problem der festsitzenden Apparaturen ist die Tatsache, dass die Spange möglicherweise über Jahre ununterbrochen getragen werden "muss" und nicht in Ausnahmefällen abgelegt werden kann. Auch bei geschlossenem Mund ist die festsitzende Zahnspange oft zu erkennen, da die Lippen etwas nach vorne gedrückt werden und der gesamte Mundbereich größer wirkt.

"Linguale" Zahnspangen werden von hinten, also an der Seite der Zunge (daher der Name), an den Zähnen befestigt. Dadurch sieht man sie nicht und es können sich optische Vorteile daraus ergeben. Allerdings ist das Anbringen, Einsetzen, Korrigieren durch die schlechte Erreichbarkeit schwieriger. Auch ist der Innenbogen wesentlich kleiner als bei Techniken der Außenseite, womit erheblich größere Kräfte auftreten können als bei Techniken der Außenseite.

Solchen Zahnspangen mit herkömmlichen Brackets sind somit nur mit einem gehörigen Aufwand anzubringen, einzusetzen und zu korrigieren, was zu immensen Kosten im Gesundheitswesen und auch bei den jeweils betroffenen Personen führt. Auch sind die langen Zeiten für die Arbeiten an der Zahnspange störend. Ferner sind die Gummiringe, mittels denen der Drahtbogen in den Schlitzen der Brackets gehalten wird, sehr anfällig und erfordern häufigen Ersatz, was umständlich ist und weitere Kostenverursacht.

Eine Vorrichtung, auf der die zweiteilige Form des Anspruchs 1 basiert, ist in der EP1226791 offenbart. Aus dieser Offenbarung ist eine Vorrichtung für die Orthodontie mit zumindest einem Mittel zur Korrektur, einem Anschlusselement und einer Halterung bekannt, wobei das Mittel zur Korrektur am Anschlusselement gehalten ist und wobei das Anschlusselement seinerseits an der Halterung fixierbar ist.

Die vorliegende Erfindung hat und erreicht das Ziel, Zahnspangenbehandlungen kostengünstiger, effizienter und weniger störend gestalten zu können.

Dazu schafft die Erfindung ein kieferorthopädisches Bracket und eine Zahnspange mit solchen Brackets.

Ein erfindungsgemäßes kieferorthopädisches Bracket nach Anspruch 1 enthält einen Sockel, der zum Halten eines Zahnspangendrahtes an einem Zahn anbringbar ist, und eine Halterung zum Halten des Zahnspangendrahtes in dem Sockel, wobei die Halterung ein Stopfen ist, der einen Durchgang für den Zahnspangendraht hat, und wobei der Sockel eine Aufnahme mit einer Aufnahmeöffnung aufweist, durch die der Stopfen in die Aufnahme einsetzbar ist.

Erfindungsgemäß ist weiter vorgesehen, dass der in der Aufnahme eingesetzte Stopfen die Aufnahmeöffnung hintergreift, wobei insbesondere der in der Aufnahme eingesetzte Stopfen die Aufnahmeöffnung formschlüssig hintergreift und/oder die Aufnahmeöffnung einen Rand hat, den der in der Aufnahme eingesetzte Stopfen hintergreift.

Eine andere vorzugsweise Ausgestaltung besteht darin, dass die Aufnahme wenigstens eine die Aufnahmeöffnung hintergreifende Erweiterung aufweist, in die der in der Aufnahme eingesetzte Stopfen eingreift.

Ferner kann mit Vorzug vorgesehen sein, dass die Aufnahme wenigstens eine Erweiterung aufweist, in die ein entsprechender Vorsprung an dem in der Aufnahme eingesetzten Stopfen oder des in der Aufnahme eingesetzten Stopfens formschlüssig eingreift, wobei vorzugsweise ferner zumindest der Vorsprung aus einem elastischen Material besteht, das insbesondere Gummi oder Silikon enthält.

Mit Vorzug kann der Stopfen zumindest eine elastische Außenschicht haben, die zur Einführung in die Aufnahmeöffnung komprimierbar ist und insbesondere Gummi oder Silikon enthält.

Eine bevorzugte Weiterbildung der vorstehenden Ausgestaltungen mit elastischen Material beim Stopfen besteht darin, dass der Stopfen zumindest eine elastische Außenschicht hat, die zur Durchführung durch die Aufnahmeöffnung und/oder Einführung in die Aufnahme so komprimierbar und dann expandierbar ist, dass die elastische Außenschicht des in der Aufnahme eingesetzten Stopfens die Aufnahmeöffnung hintergreift oder in die Erweiterung der Aufnahme eingreift, wobei die elastische Außenschicht insbesondere Gummi oder Silikon enthält.

Noch weitere vorzugsweise Ausgestaltungen bestehen darin, dass der Stopfen zumindest eine elastische Außenschicht hat, die zur Einführung in die Aufnahme komprimierbar ist und einen kraftschlüssigen Halt des Stopfens in der Aufnahme gewährleistet, wobei die elastische Außenschicht insbesondere Gummi oder Silikon enthält, und/oder dass der Stopfen aus elastischem Material besteht, das insbesondere Gummi oder Silikon enthält.

Es kann insbesondere auch vorgesehen sein, dass die Aufnahmeöffnung einen Rand hat, der zumindest einen elastischen Abschnitt hat, um die Durchführung eines Stopfens mit größeren Abmessungen als denjenigen der Aufnahmeöffnung zu erleichtern oder zu gestatten, wobei weiter vorzugsweise der elastische Abschnitt durch eine Federzunge gebildet ist und/oder der Rand der Aufnahmeöffnung zwei elastische Abschnitte hat, die einander zumindest im wesentlichen gegenüber liegen.

Noch eine andere bevorzugte Ausgestaltung besteht darin, dass die Aufnahmeöffnung eine zumindest annähernd rechteckige Form hat.

Mit Vorzug kann der Stopfen zum Einführen eines Zahnspangendrahtes einen Einführungsschlitz haben, der von der Außenseite bis zum Durchgang reicht, und/oder kann der Stopfen wenigstens zwei zumindest im wesentlichen parallel beabstandete Durchgänge haben, in die ein Zahnspangendraht wahlweise eingeführt werden kann.

Ferner kann vorzugsweise vorgesehen sein, dass der Durchgang des Stopfens einen eckigen, insbesondere rechteckigen Querschnitt hat, und/oder dass der Durchgang des Stopfens von einem unelastischen Material umgeben ist.

Weitere bevorzugte Ausgestaltungen bestehen darin, dass der Stopfen scheibenartig ist und der Durchgang in Dickenrichtung verläuft, und/oder dass der Stopfen scheibenartig ist und an seiner Umfangsfläche Rastungen zum Eingriff in der Aufnahme des Sockels enthält, und/oder dass der Stopfen scheibenartig mit einer Umfangsfläche ausgebildet ist, von der ein Bereich eine Abdeckung der Aufnahmeöffnung bildet, wobei insbesondere die Abdeckung die Aufnahmeöffnung zumindest im wesentlichen abdeckt und noch weiter mit Vorzug die Abdeckung über die Aufnahmeöffnung hinaus geht. Ferner hat die Abdeckung vorzugsweise eine zumindest im wesentlichen glatte Sichtseite, wobei insbesondere die Sichtseite eben oder konvex gekrümmt ist.

Es kann weiter insbesondere vorgesehen sein, dass der Sockel aus einem Metall-, Keramik- oder Kunststoffmaterial besteht.

Noch weitere bevorzugte Ausgestaltungen bestehen darin, dass der Sockel eine Basis enthält, mittels der der Sockel an einem Zahn anbringbar ist und die die Aufnahme trägt, wobei insbesondere die Basis eine Montageseite hat, deren Abmessungen größer als die Abmessungen der Aufnahmeöffnung sind, und ferner bevorzugt die Montageseite der Basis eine trapezartige Form hat.

Eine ebenfalls bevorzugte Ausgestaltung besteht darin, dass die Aufnahme einen Aufnahmeraum enthält, der durch die Aufnahmeöffnung zugänglich ist und zur Aufnahme des Stopfens dient, wobei insbesondere der Aufnahmeraum eine quaderartige Grundform hat.

Ferner kann vorzugsweise vorgesehen sein, dass die Aufnahme einen Aufnahmeschlitz zum Einlegen und Ausrichten des Zahnspangendrahtes hat, und dass der Durchgang in dem Stopfen, wenn letzterer in die Aufnahme eingesetzt ist, mit dem Aufnahmeschlitz in der Aufnahme ausgerichtet ist.

Weiterhin kann mit Vorzug vorgesehen sein, dass der Aufnahmeschlitz zum Einlegen und Ausrichten des Zahnspangendrahtes durch bezüglich des Sockels auswärts weisende seitliche Vorsprünge flankiert ist. Alternativ oder zusätzlich ist es bevorzugt, wenn sich an den Aufnahmeschlitz zum Einlegen und Ausrichten des Zahnspangendrahtes wenigstens ein bezüglich des Sockels auswärts weisender, einen in den Aufnahmeschlitz eingelegten Zahnspangendraht zum Zahn hin abstützender vorspringender Steg anschließt.

Noch eine weitere vorzugsweise Ausgestaltung besteht darin, dass der Aufnahmeschlitz zum Einlegen und Ausrichten des Zahnspangendrahtes bezüglich der Aufnahmeöffnung der Aufnahme des Sockels einen schräg gekippt ausgerichteten Querschnitt für einen Zahnspangendraht mit entsprechendem Querschnitt aufweist.

Es kann ferner mit Vorteil vorgesehen sein, dass der Stopfen, insbesondere zumindest dessen aus dem Sockel herausragender Teil, und/oder die Oberfläche des Sockels selbst, soweit diese Oberfläche bei an einem Zahn angebrachtem Bracket und eingesetztem Stopfen mit Zahnspangendraht frei liegt, eine Nanobeschichtung aufweisen/aufweist, die ausgelegt ist, ein Anhaften von Schmutz zu verhindern.

Gemäß einem weiteren Aspekt kann der Sockel aus verschiedenen Materialien bestehen, wobei insbesondere der Sockel im Bereich um den Aufnahmeschlitz herum hart ist und das Material, das die Montageseite bestimmt, die auf den Zahn kommt, weich ist.

Eine andere bevorzugte Ausgestaltung besteht darin, dass der Sockel des Brackets materialmäßig so gestaltet ist, dass in Verbindung mit einem anderen Material, z.B. des Zahnspangendrahtes, eine elektrische Spannung entsteht, die wiederum eine Reaktion des Zahnspangendrahtes hervorruft.

Vorzugsweise kann auch vorgesehen sein, dass der Sockel oder zumindest dessen Montageseite aus einem Kunststoff besteht, der durch UV-Strahlen aushärtet, so dass der Sockel oder dieser mit seiner Montageseite im weichen Zustand auf einen Zahn aufgebracht werden kann, so dass sich insbesondere die Montageseite der Zahnfläche anpasst, und dann durch UV-Bestrahlung ausgehärtet wird.

Noch eine weitere bevorzugte Ausgestaltung besteht darin, dass der Sockel so gestaltet ist, dass er einen vorgegebenen Torquewinkel und/oder Angulationswinkel für die Ausrichtung und Positionierung des Zahnspangendrahtes gewährleistet.

Es kann ferner mit Vorzug vorgesehen sein, dass der Sockel eine Montageseite aufweist, deren Gestalt und/oder Dimensionierung auf eine bestimmte Zahnart oder Zahngröße abgestimmt ist. Dabei kann weiterhin der Sockel eine Montageseite aufweisen, die zur Anpassung an eine Zahnoberfläche konkav einwärts gekrümmt ist.

Nach noch einer weiteren bevorzugten Ausgestaltung hat der Sockel eine grundsätzlich rechtwinklige oder eine trapezförmige, nicht rechtwinklige Montageseite.

In vorteilhafter Weise kann der Stopfen einen Einführungsschlitz haben, der von einem Stopfenrand bis zu einem Durchgang des Stopfens für den Zahnspangendraht reicht. Dies kann dadurch mit Vorteil weitergebildet sein, dass der Einführungsschlitz insbesondere elastisch und/oder reversibel aufweitbar ist, und/oder dass der Einführungsschlitz vom Durchgang zum Stopfenrand V-förmig aufgeweitet ist.

Der Stopfen kann mit Vorteil an einem Abflachungsbereich, der die Aufnahmeöffnung der Aufnahme des Sockels abdeckt, wenn der Stopfen in der Aufnahme des Sockels aufgenommen ist, mit einer Griffhilfe, wie insbesondere einem Knauf, einem Haken oder einem Teller, zum Greifen versehen sein, wobei insbesondere weiter vorgesehen sein kann, dass die Griffhilfe über eine Solltrennstelle mit dem Abflachungsbereich des Stopfens verbunden ist.

Die Erfindung schafft außerdem noch eine Zahnspange mit derartigen kieferorthopädischen Brackets.

Die Erfindung wird anhand von Ausführungsbeispielen nachfolgend unter Bezugnahme auf die Zeichnung lediglich exemplarisch näher erläutert, in der
- Fig. 1a und 1b: entsprechend jeweils schematisch in einer teilweise geschnittenen Seitenansicht und einer Draufsicht ein erstes Ausführungsbeispiel eines kieferorthopädischen Brackets veranschaulichen,
- Fig. 2a bis 2d: entsprechend jeweils schematisch in einer Seitenansicht, einer dazu rechtwinkligen zweiten Seitenansicht, einer Draufsicht und einer perspektivischen Ansicht ein zweites Ausführungsbeispiel eines kieferorthopädischen Brackets veranschaulichen,
- Fig. 3a bis 3d: entsprechend jeweils schematisch in einer Seitenansicht, einer dazu rechtwinkligen zweiten Seitenansicht, einer Draufsicht und einer perspektivischen Ansicht ein Anschauungsbeispiel zur Verdeutlichung eines Vorteils des kieferorthopädischen Brackets nach der Erfindung gegenüber einem kieferorthopädischen Bracket nach dem Stand der Technik veranschaulichen, aber auch weitere Ausgestaltungsvarianten des kieferorthopädischen Brackets nach der Erfindung zeigen,
- Fig. 4a bis 4f: entsprechend jeweils schematisch in einer Seitenansicht sechs verschiedene Ausführungsbeispiele eines Stopfens für ein kieferorthopädischen Brackets veranschaulichen,
- Fig. 5a und 5b: entsprechend jeweils schematisch in einer Seitenansicht von einem dritten Ausführungsbeispiel eines kieferorthopädischen Brackets den Stopfen alleine und den in einen Sockel eingesetzten Stopfen zeigen,
- Fig. 6a und 6b: entsprechend jeweils schematisch in einer Seitenansicht von einem vierten Ausführungbeispiel eines kieferorthopädischen Brackets den Stopfen alleine und den in einen Sockel eingesetzten Stopfen zeigen,
- Fig. 7a und 7b: entsprechend jeweils schematisch in einer Seitenansicht von einem fünften Ausführungsbeispiel eines kieferorthopädischen Brackets den Stopfen alleine und den in einen Sockel eingesetzten Stopfen zeigen,
- Fig. 8a und 8b: entsprechend jeweils schematisch in einer Seitenansicht von einem sechsten Ausführungsbeispiel eines kieferorthopädischen Brackets den Stopfen alleine und den in einen Sockel eingesetzten Stopfen zeigen,
- Fig. 9a bis 9e: entsprechend jeweils schematisch in einer Draufsicht und in einer Seitenansicht von einem siebten, achten, neunten, zehnten und elften Ausführungsbeispiel eines kieferorthopädischen Brackets den Sockel alleine zeigen,
- Fig. 10: entsprechend jeweils schematisch in einer perspektivischen Ansicht, in einer Längsschnittsansicht und in einer Querschnittsansicht von einem zwölften Ausführungsbeispiel eines kieferorthopädischen Brackets den Sockel alleine zeigt,
- Fig. 11: entsprechend jeweils schematisch in einer perspektivischen Ansicht, in einer Längsschnittsansicht und in einer Querschnittsansicht von einem dreizehnten Ausführungsbeispiel eines kieferorthopädischen Brackets den Sockel alleine zeigt,
- Fig. 12a und 12b: entsprechend jeweils schematisch in einer Querschnittsansicht und in einer Längsschnittsansicht, die analog zu den Querschnittsansichten und Längsschnittsansichten der Fig. 10 und 11 liegen, von einem vierzehnten und einem fünfzehnten Ausführungsbeispiel eines kieferorthopädischen Brackets den Sockel alleine zeigen,
- Fig. 13: schematisch in einer Draufsicht von einem sechzehnten Ausführungsbeispiel eines kieferorthopädischen Brackets den Sockel alleine zeigt,
- Fig. 14: schematisch in einer Seitenansicht von einem siebzehnten Ausführungsbeispiel eines kieferorthopädischen Brackets den Stopfen alleine zeigt,

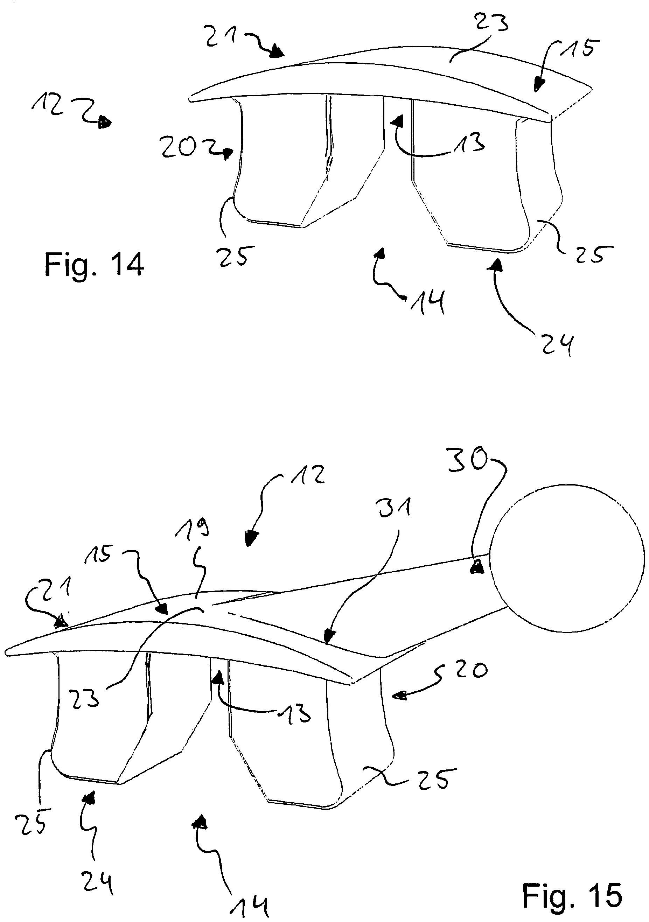

- Fig. 14: schematisch in einer Seitenansicht von einem achtzehnten Ausführungsbeispiel eines kieferorthopädischen Brackets den Stopfen alleine zeigt, und
- Fig. 15: schematisch in einer perspektivischen Ansicht von einem neunzehnten Ausführungsbeispiel eines kieferorthopädischen Brackets den Sockel alleine zeigt.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele oder auf die jeweiligen Merkmalskombinationen innerhalb einzelner Ausführungs- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit konkreten Ausführungsbeispielen angeben und/oder dargestellt sind, sind nicht auf diese Ausführunasbeispiele oder die Kombination mit den übrigen Merkmalen dieser Ausführungsbeispiele beschränkt, sondern können im Rahmen des technisch Möglichen, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Vorrichtungs- und Verfahrensmerkmale ergeben sich auch jeweils aus bildlichen und schriftlichen Darstellungen von Verfahren bzw. Vorrichtungen.

Ferner ist die Bezugszeichenliste am Ende dieser Beschreibung explizit Bestandteil dieser Beschreibung.

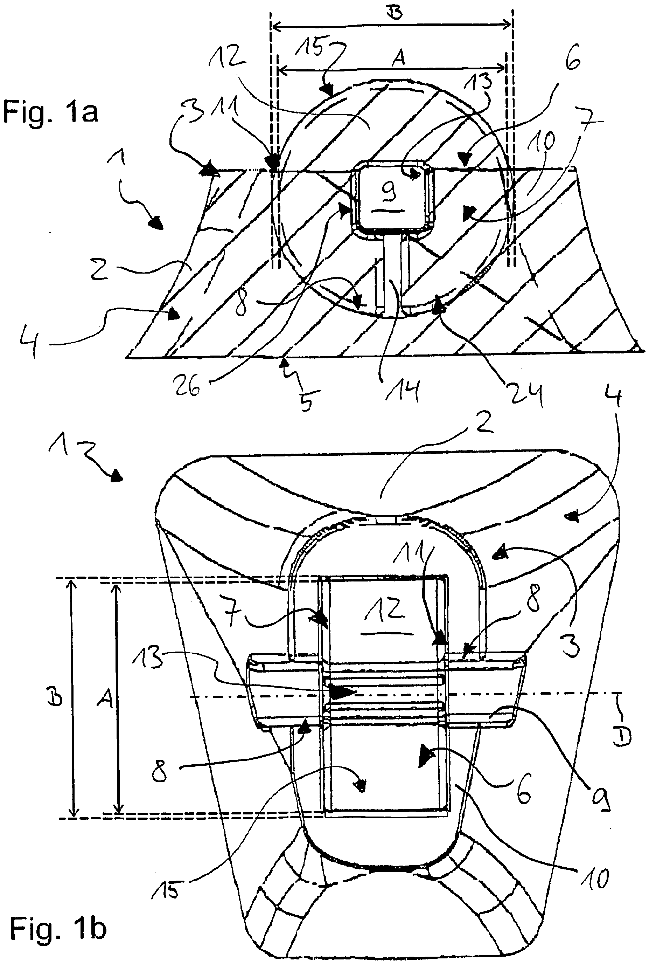

In den Figuren 1a und 1b ist schematisch ein erstes Ausführungsbeispiel eines kieferorthopädischen Brackets 1 entsprechend in einer teilweise geschnittenen Seitenansicht bzw. einer Draufsicht gezeigt. Das Bracket 1 enthält einen Sockel 2 aus metallischem, Keramik- oder Kunststoffmaterial. Der Sockel 2 besteht aus einer Aufnahme 3 und einer Basis 4, die eine Montageseite 5 hat, mittels der der Sockel 2 an einem Zahn (nicht dargestellt) insbesondere durch Verwendung eines geeigneten Klebemittels angebracht werden kann. Solche geeignete Klebemittel sind in der Kieferorthopädie und Zahntechnik gut bekannt, und ein näheres Eingehen darauf erübrigt sich deshalb und, weil diese Klebemittel nicht zum Kern der vorliegenden Erfindung gehören.

Die Aufnahme 3 hat entgegengesetzt zur Montageseite 5 liegend eine Aufnahmeöffnung 6, durch die ein Aufnahmeraum 7 zugänglich ist. Die Montageseite 5 hat größere Abmessungen als die Aufnahmeöffnung 6 und beim vorliegenden ersten Ausführungsbeispiel, wie insbesondere in der Figur 1b zu sehen ist, eine trapezartige Form, bei der zwei der parallelen Seiten ungleich lang sind. Die Aufnahmeöffnung 6 hat, wie ebenfalls insbesondere in der Figur 1b zu sehen ist, eine zumindest im wesentlichen rechteckige Form. Die Grundform des Aufnahmeraums 7 ist quaderartig, worunter im Rahmen der vorliegenden Unterlagen auch Quaderformen zu verstehen sind, bei denen einzelne Seiten konvex oder konkav gekrümmt oder in anderer Weise uneben sind. Die Aufnahme 3 hat ferner einen Aufnahmeschlitz 8 zum Einlegen und Ausrichten eines Zahnspangendrahtes 9, wodurch eine Drahtachse D definiert ist (siehe Figur 1b). Der Zahnspangendraht 9 hat bei dem in den Figuren 1a und 1b gezeigten ersten Ausführungsbeispiel einen quadratischen Querschnitt, zu dem die Form des Aufnahmeschlitzes 8 passend ausgestaltet ist. Der Aufnahmeraum 7 ist von einer Wand 10 der Aufnahme 3 umgeben, die zur Aufnahmeöffnung 6 hin einen Rand 11 enthält.

Das Bracket 1 enthält ferner einen Stopfen 12, der beim vorliegenden ersten Ausführungsbeispiel gemäß den Figuren 1a und 1b aus einem elastischen Material besteht, wie beispielsweise Gummi oder Silikon. Der Stopfen 12 ist scheibenartig mit einem Durchgang 13 in der Dickenrichtung. Der Durchgang 13 ist in Form und Abmessungen angepasst an den oder übereinstimmend mit dem Aufnahmeschlitz 8 und dem Querschnitt des Zahnspangendrahtes 9. Wenn der Stopfen 11 in den Aufnahmeraum 7 der Aufnahme 3 eingesetzt ist, ist der Durchgang 13 mit dem Aufnahmeschlitz 8 ausgerichtet, so dass in diesem Zustand ein Zahnspangendraht 9 durch den Aufnahmeschlitz 8 und dem Durchgang 13 ungehindert hindurchgehen kann. Zur Anbringung des Zahnspangendrahtes 9 in dem Sockel 2 des Brackets 1 wird praktischerweise zuerst der Stopfen 12 auf den Zahnspangendraht 9 aufgesteckt und dann zusammen mit dem Zahnspangendraht 9 in die Aufnahmeöffnung 6 der Aufnahme 3 gesteckt oder gedrückt. Die Drahtachse D ist somit die gemeinsame Achse vom Zahnspangendraht 9 im Bereich der Aufnahme 3, vom Aufnahmeschlitz 8 und vom Durchgang 13.

Die Aufnahmeöffnung 6 hat quer zu der durch die Aufnahmeschlitze 8 definierten Drahtachse D eine Abmessung A, und der scheibenartige Stopfen 12, der bei dem ersten Ausführungsbeispiel gemäß den Figuren 1a und 1b, wie insbesondere 1a gut zu erkennen ist, einen kreisartigen Querschnitt hat, hat einen Durchmesser B quer zu der durch den Durchgang 13 definierten Drahtachse D, der im unbelasteten oder unkomprimierten Zustand des Elastikmaterials des Stopfens 12 geringfügig größer als die Abmessung A der Aufnahmeöffnung 6 ist. Die Abmessungen A und B sind parallel betrachtet und durch die Lage der Aufnahmeöffnung 6 und den in den Aufnahmeraum 7 eingesetzten Stopfen 12 festgelegt. Der Aufnahmeraum 7 ist nach dem Rand 11 der Aufnahmeöffnung 6 erweitert, hat dann also eine größere Weite als das Maß der Abmessung A, und hat quer zu der durch den Aufnahmeschlitz 8 bestimmten Drahtachse D eine Abmessung B entsprechend dem unbelasteten oder unkomprimierten Elastikmaterial des Stopfens 12.

Wenn der Stopfen 12 durch die Aufnahmeöffnung 6 in den Aufnahmeraum 7 eingesetzt werden soll, wird er, was sein elastisches Material gestattet, zusammengedrückt, um durch die durch die Abmessung A der Aufnahmeöffnung 6 bestimmte Weite der Aufnahmeöffnung 6 zu passen. Sobald der zylindrische oder scheibenartige Stopfen 12 über die Hälfte durch die Aufnahmeöffnung 6 in den Aufnahmeraum 7 gedrückt wurde, kann sich das elastische Material des Stopfens 12 wieder ausdehnen (vergleiche Fig. 1a). Auf diese Weise hintergreift der in den Aufnahmeraum 7 der Aufnahme 3 eingesetzte Stopfen 12 die Aufnahmeöffnung 6 innerhalb des Aufnahmeraumes 7 am Rand 11. Dadurch, und durch die im übrigen zur Form des in den Aufnahmeraum 7 eingesetzten Bereiches des Stopfens 12 analoge Form des Aufnahmeraums 7 ist der Stopfen 12 formschlüssig in den Aufnahmeraum 7 eingesetzt.

Wegen der Elastizität des Materials des Stopfens 12 kann dieser aber auch wieder aus der Aufnahme 3 heraus gezogen werden, ist also somit lösbar in die Aufnahme 3 eingesetzt. Die Elastizität des Materials des Stopfens 12 ist praktischerweise so zu wählen, dass einerseits ein Einsetzen und Entnehmen des Stopfens 12 bezüglich des Aufnahmeraums 7 der Aufnahme 3 durch die bezüglich der Durchmesserabmessung B kleinere Weitenabmessung A der Aufnahmeöffnung 6 möglich ist, und andererseits ein sicherer und fester Sitz des Stopfens 12 in der Aufnahme 3, wie beispielsweise durch eine Klemmwirkung zwischen dem Stopfen 12 und dem Aufnahmeraum 7 oder zumindest dem Aufnahmeschlitz 8, gewährleistet ist, wenn ein Zahnspangendraht 9 durch den Durchgang 13 und den Aufnahmeschlitz 8 hindurchgeführt ist und Kräfte zur Verstellung des Zahns (nicht gezeigt) ausübt, an dem das Bracket 1 angebracht ist.

Statt den ganzen Stopfen 12 aus einem elastischen Material herzustellen, kann der Stopfen 12 auch nur eine elastische Außenschicht (nicht gezeigt) enthalten, die durch ihre Abmessungen und Materialeigenschaften ein entsprechendes Komprimieren des Stopfens 12 beim Einsetzen durch die Aufnahmeöffnung 6 gestattet. Der Stopfen 12 kann in einem solchen Fall im Übrigen aus einem unelastischen Material, wie beispielsweise einem Hartkunststoff, bestehen.

Der Stopfen 12 hat ferner quer zu seiner Durchmesserabmessung einen Einführungsschlitz 14, der vom Stopfenrand 15 bis zum Durchgang 13 des Stopfens reicht (siehe Figur 1a). Der Einführungsschlitz 14 dient dazu, dass der Stopfen 12 auf einen Zahnspangendraht 9 durch den Einführungsschlitz 14 aufgesteckt werden kann, ohne dass der Durchgang 13 des Stopfens 12 auf den Zahnspangendraht 9 aufgefädelt werden und über eine größere Länge des Zahnspangendrahtes 9 bis zu der Stelle geschoben werden muss, wo er in die Aufnahme 3 des zugehörigen Brackets 1 eingedrückt werden kann.

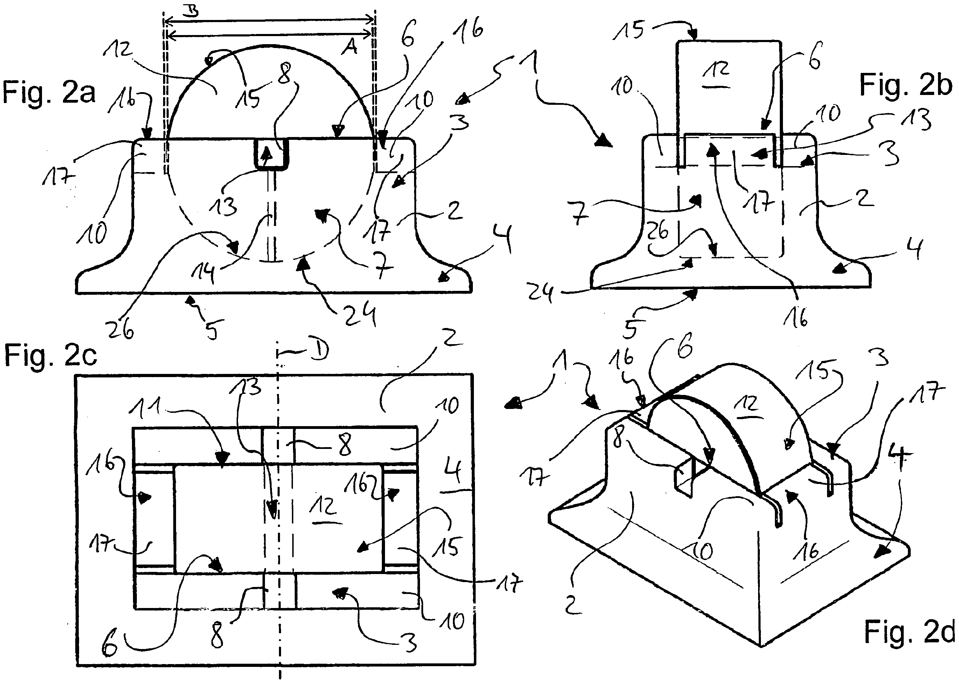

In den Figuren 2a bis 8b der Zeichnung sind weitere Ausführungsbeispiele des Brackets gezeigt. Die entsprechenden nachfolgenden schriftlichen Erläuterungen nehmen nur auf die Merkmale Bezug, die nicht schon im Zusammenhang mit vorher erläuterten Ausführungsbeispielen verdeutlicht wurden, um entsprechende bloße Wiederholungen zu vermeiden. Soweit Merkmale bei später behandelten Ausführungsbeispielen gleich sind mit Merkmalen von früher behandelten Ausführungsbeispielen wird dies einerseits durch die Darstellung in den Abbildungen der Figuren und andererseits durch die identisch verwendeten Bezugszeichen deutlich. Insofern gelten im Folgenden automatisch die jeweils vorstehenden Erläuterungen zu Ausgestaltungen und Funktionen der entsprechenden Merkmale.

In den Figuren 2a, 2b, 2c und 2d, ist ein zweites Ausführungsbeispiel eines Brackets 1 schematisch in einer ersten Seitenansicht, in einer zweiten Seitenansicht, die bezüglich der ersten Seitenansicht um 90° gedreht ist, in einer Draufsicht und in einer perspektivischen Ansicht gezeigt. Der Stopfen 12 dieses zweiten Ausführungsbeispiels des Brackets 1 ist aus einem Hartkunststoff und hat quer zur Drahtachse D eine Abmessung B, die größer als die Weitenabmessung A der Aufnahmeöffnung 6 der Aufnahme 3 ist. Damit der Stopfen 12 dennoch durch die Aufnahmeöffnung 6 in den Aufnahmeraum 7 gesteckt werden kann, enthält der Rand 11 der Aufnahmeöffnung 6 zwei elastische Abschnitte 16, die beim Eindrücken des scheibenartigen Stopfens 12 dem Stopfenrand 15 zugewandt sind. Die elastischen Abschnitte 16 sind durch Federzungen 17 gebildet, die durch Gestaltung und Material elastisch nach außen, d.h. von der Aufnahmeöffnung 6 weg, oder anders ausgedrückt, die Aufnahmeöffnung 6 vergrößernd, nachgeben, wenn der Stopfen 12 durch die Aufnahmeöffnung 6 in den Aufnahmeraum 7 eingedrückt wird. Dadurch wird der Stopfen 12 durch eine Klemmwirkung der elastischen Abschnitte 16 oder Federzungen 17 in dem Aufnahmeraum 7 gehalten.

Im weiteren Unterschied zu den in den Figuren 1a und 1b dargestellten ersten Ausführungsbeispiel ist die Montageseite 5 der Basis 4 des Sockels 2 beim zweiten Ausführungsbeispiel gemäß den Figuren 2a bis 2d nicht trapezförmig mit einem Paar unterschiedlich langer paralleler Seiten, sondern hat eine rechteckige Form.

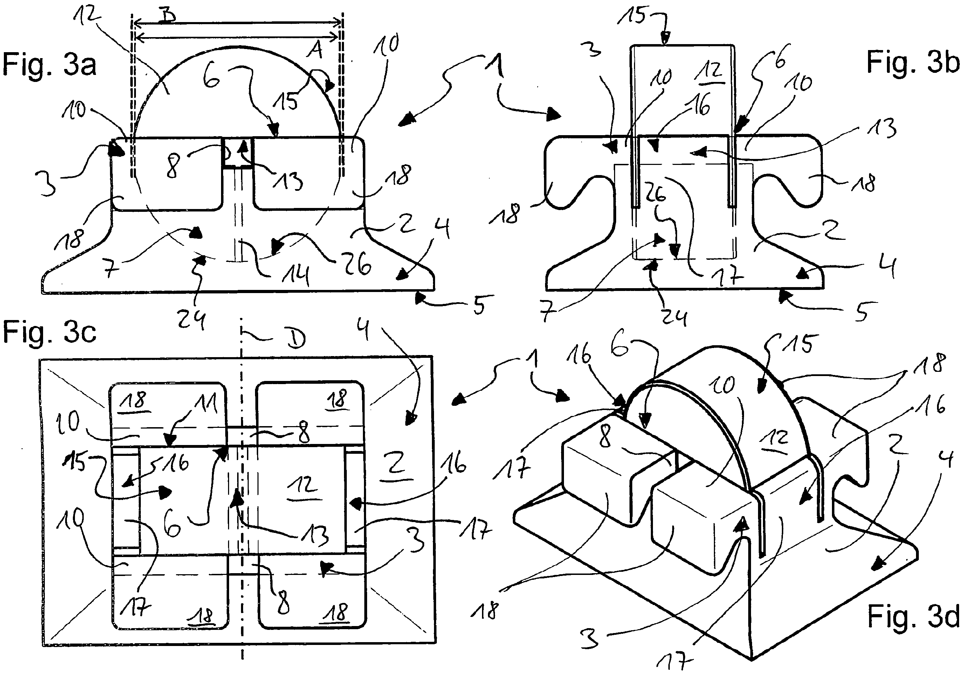

In den Figuren 3a, 3b, 3c und 3d sind analoge Ansichten zu den Ansichten in den Figuren 2a, 2b, 2c bzw. 2d von einer Gestaltung eines Brackets 1 gezeigt, an dem Merkmale des Standes der Technik zu Zwecken der Veranschaulichung dargestellt sind. Um bei Brackets des Standes der Technik den Zahnspangendraht mittels kleiner Gummiringe, d.h. den Alastics, befestigen zu können, sind an den Sockeln geeignete Haken 18 in der Regel integral ausgebildet. Wie insbesondere die Abbildungen der Figuren 3b, 3c und 3d deutlich zeigen, sind durch die Haken 18 die Abmessungen der Sockel 2 solcher Brackets 1 deutlich vergrößert, was einem Tragekomfort entgegen wirkt und das Aussehen auch der Lippen von Außen beim Tragen einer Zahnspange mit solchen Brackets negativ beeinträchtigt. Die in den Figuren 3a, 3b, 3c und 3d gezeigte Variante verdeutlicht aber, dass die Ausgestaltung des Brackets 1 gemäß der vorliegenden Erfindung d.h. mit dem Stopfen 12 zum Einsetzen in den Aufnahmeraum 7 der Aufnahme 3 auch mit herkömmlichen Ausgestaltungen von Brackets kombiniert werden kann. Die Ausgestaltung der Aufnahme 3 und des Stopfens 12 im Übrigen ist bei der Variante gemäß den Figuren 3a bis 3d identisch zu der Ausgestaltung des zweiten Ausführungsbeispiels gemäß den Figuren 2a bis 2d mit der Ausnahme, dass die Federzungen 17 in der Tiefenrichtung des Aufnahmeraumes 7 gemäß den Figuren 3a bis 3d länger ausgeführt sind als bei dem zweiten Ausführungsbeispiel gemäß den Figuren 2a bis 2d.

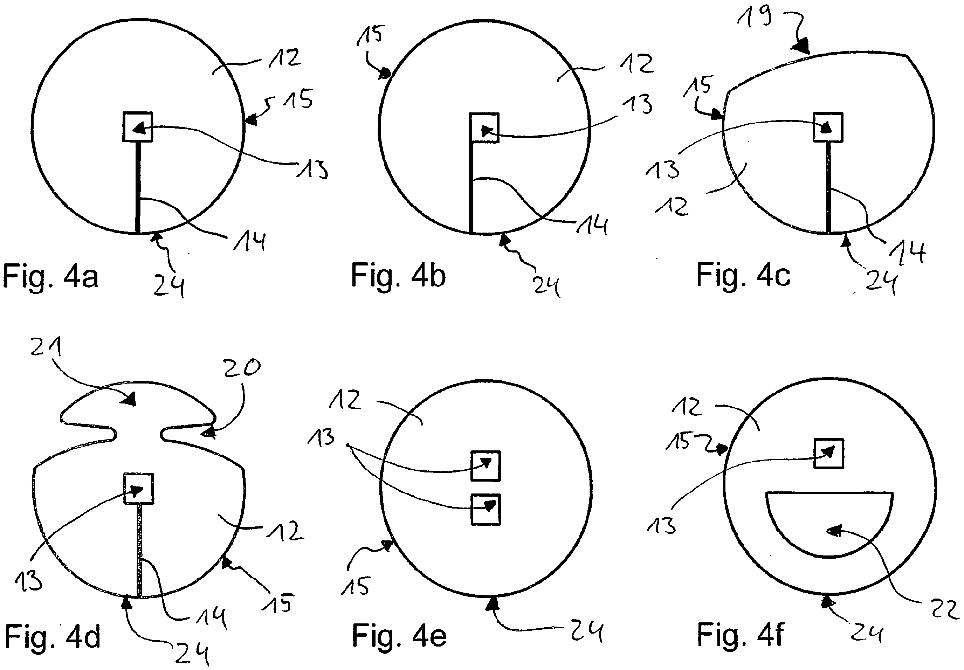

In den Figuren 4a, 4b, 4c und 4d, 4e und 4f sind verschiedene Formen für den Stopfen 12 gezeigt.

Der Stopfen 12 gemäß der Figur 4a ist zylindrisch und hat einen Einführungsschlitz 14, der mittig in den Durchgang 13 mündet.

Bei dem in der Figur 4b gezeigten Stopfen 12 mündet der Einführungsschlitz 14 seitlich in den Durchgang 13.

Der in der Figur 4c dargestellte Stopfen 12 hat einen Abflachungsbereich 19, so dass er, wenn er in den Aufnahmeraum 7 der Aufnahme 3 eingesetzt ist, nur geringfügig durch die Aufnahmeöffnung 6 vorsteht.

In der Figur 4d ist ein Stopfen 12 mit einer Ausgestaltung gezeigt, die eine Taillierung 20 enthält, durch die, wenn der Stopfen 12 aus einem elastischen Material besteht, ein weicher wirkender Kopfbereich 21 gebildet ist, durch den der Tragekomfort erhöht wird. Besteht der Stopfen 12 gemäß der Figur 4d aus unelastischem Materials, so kann er in vorteilhafter Weise mit einer Aufnahme 3 kombiniert werden, die Federzungen 17 (vergleiche Figuren 2a bis 2d und 3a bis 3d) oder andere elastische Abschnitte 16 zum Eingriff in die Taillierung 20 hat, wodurch ein besonders fester Halt des in die Aufnahme 3 eines Sockels 2 eingesetzten Stopfens 12 erreicht wird.

Das weitere Ausführungsbeispiel eines Stopfens 12 gemäß der Figur 4e zeigt in dem Stopfen 12 zwei Durchgänge 13. Durch eine Mehrzahl von Durchgängen 13 in dem Stopfen 12 insbesondere an radial unterschiedlichen Stellen bestehen zusätzliche Möglichkeiten für die Führung und Ausrichtung eines Zahnspangendrahtes 9 durch ein entsprechend ausgestattetes Bracket 1 und damit eine bessere Anpassbarkeit des Brackets 1 an die individuellen Anforderungen des Patienten.

Bei dem Stopfen 12, der in der Figur 4f gezeigt ist, ist parallel zu dem Durchgang 13 ein Durchbruch 22 enthalten, durch den im Fall eines Stopfens 12 aus elastischem Material die Elastizität in diesem Bereich des Stopfens 12 weiter erhöht ist, was einer zusätzlichen Erleichterung des Einführens des Stopfens 12 durch die Aufnahmeöffnung 6 in einen Aufnahmeraum 7 einer Aufnahme 3 zugute kommt. Der Durchbruch 22 hat weiter den Vorteil, dass beim Stopfen 12 Material und Gewicht eingespart wird, was geringere Kosten und einen erhöhten Tragekomfort zur Folge hat.

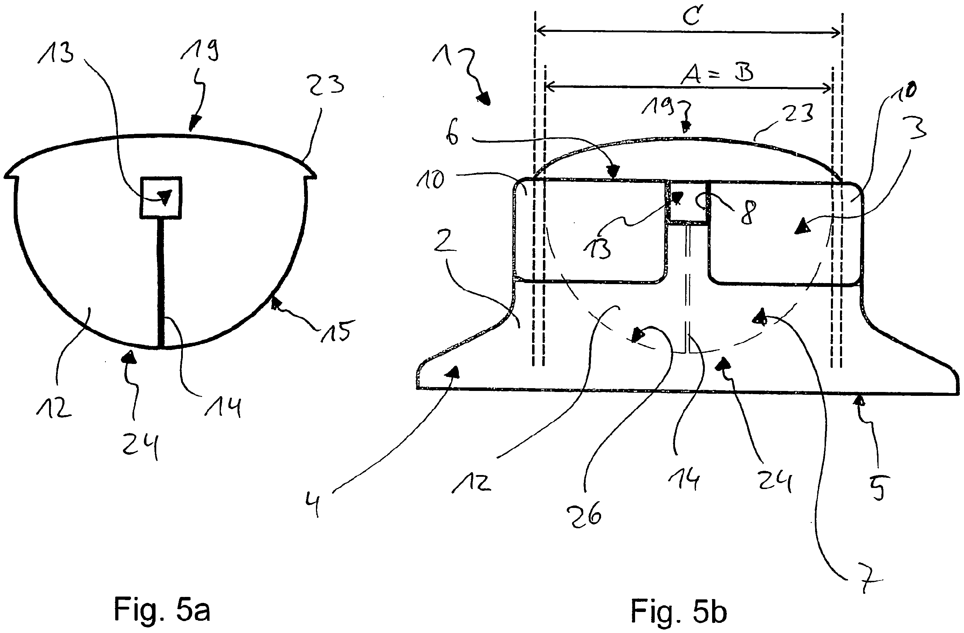

In der Figur 5b ist ein drittes Ausführungsbeispiel eines Brackets 1 gezeigt, und die Figur 5a zeigt den Stopfen 12 dieses dritten Ausführungsbeispiels alleine, wobei die Abbildungen schematische Seitenansichten sind. Der Stopfen 12 dieses dritten Ausführungsbeispiels eines Brackets 1 besteht aus elastischem Material und hat quer zur Drahtachse D (vergleiche Figuren 1a und 1b) im unbelasteten oder nicht zusammengedrückten Zustand eine größere Abmessung B als die Abmessung A der Weite der Aufnahmeöffnung 6. Dieser Stopfen 12 des dritten Ausführungsbeispiels gemäß den Figuren 5a und 5b wird zum oder beim Eindrücken in den Aufnahmeraum 7 der Aufnahme 3 zusammengepresst und bleibt, wenn er in die Aufnahmeöffnung 6 der Aufnahme 3 eingesetzt ist, in dem komprimierten Zustand. Auf Grund der Elastizität des Materials des Stopfens drückt dieser, wenn er in den Aufnahmeraum 7 eingesetzt ist, gegen dessen Wand 10 und wird dort kraftschlüssig gehalten. Hinterschneidungen, wie sie bei den Ausführungsbeispielen und Varianten gemäß den Figuren 1a bis 3d vorgesehen sind, enthält die Aufnahme 3 des Brackets 1 dieses dritten Ausführungsbeispiels gemäß den Figuren 5a und 5b nicht.

Bei dem dritten Ausführungsbeispiel gemäß den Figuren 5a und 5b hat der scheibenartige Stopfen 12 einen Stopfenrand 15, der in dem Bereich, der nach dem Einsetzen des Stopfens 12 in den Aufnahmeraum 7 außerhalb der Aufnahmeöffnung 6 bleibt, abgeflacht und erweitert ist, wodurch eine Abdeckung 23 gebildet ist, die die Aufnahmeöffnung 6 der Aufnahme 3 vollständig überdeckt.

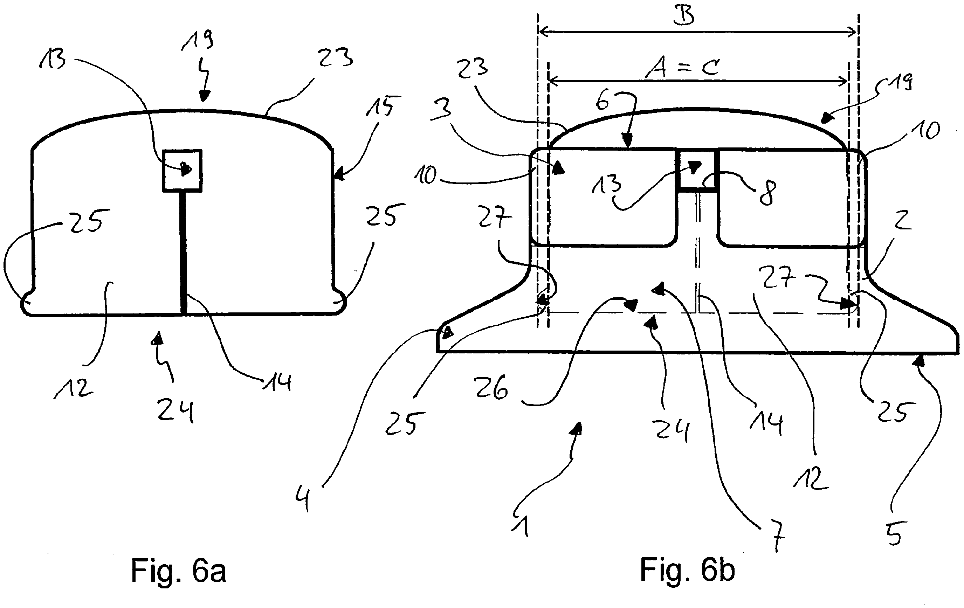

Ein viertes Ausführungsbeispiel eines Brackets 1 ist in den Figuren 6a und 6b in Darstellungen analog zu den Abbildungen in den Figuren 5a und 5b gezeigt. Bei diesem Ausführungsbeispiel hat der Stopfen 12 an seinem Einführungsende 24, das beim Einführen des Stopfens 12 in den Aufnahmeraum 7 zuerst durch die Aufnahmeöffnung 6 geschoben wird, einen wulstartigen Vorsprung 25 an jeder Seite des Stopfenrandes 15 und ist vollständig aus elastischem Material. Der Aufnahmeraum 7 des Sokkels 2 hat an seinem Boden 26 entsprechend geformte und angeordnete nutartige Erweiterungen 27 passend zu dem wulstartigen Vorsprung 25 des Stopfens, so dass jeder wulstartige Vorsprung 25 in eine nutartige Erweiterung 27 eingreift, wenn der Stopfen 12 vollständig in den Aufnahmeraum 7 eingesetzt ist, so dass das Einführungsende 24 des Stopfens 12 gegen den Boden 26 des Aufnahmeraums 7 anliegt.

Der in die Erweiterung 27 des Aufnahmeraums 7 eingreifende Vorsprung 25 des Stopfens 12, wenn letzterer vollständig in den Aufnahmeraum 7 eingesetzt ist, stellt einen Formschluss her und sichert die feste Halterung des Stopfens 12 in der Aufnahme 3. Jeder wulstartige Vorsprung 25 ist integral mit dem Stopfen 12 aus elastischem Material hergestellt, so dass sich das Einführungsende 24 des Stopfens 12 beim Einführen des letzteren durch die Aufnahmeöffnung 6 der Aufnahme 3 zusammendrücken lässt. In der Figur 6b ist einerseits die Abmessung A der Aufnahmeöffnung 6 und andererseits die Abmessung C des Stopfens 12 im Bereich des wulstartigen Vorsprungs 25 eingezeichnet. Die Abmessung C gilt somit auch für den Aufnahmeraum 7 im Bereich der Erweiterung 27, und die Abmessung B gilt auch für den Stopfen 12 im Übrigen außer am Vorsprung 25.

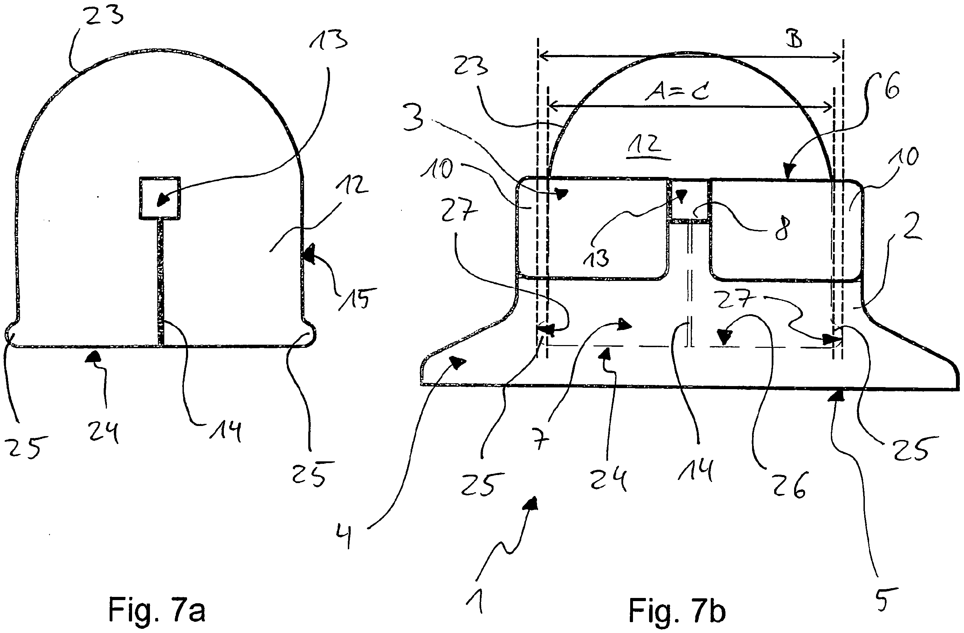

Bei dem fünften Ausführungsbeispiel eines Brackets 1 gemäß den Figuren 7a und 7b ist der Stopfen 12 im Vergleich zu dem Stopfen 12 des vierten Ausführungsbeispiels gemäß den Figuren 6a und 6b an seinem freien, nach dem Einsetzen in den Aufnahmeraum 7 der Aufnahme 3 aus letzterer herausragenden Ende dicker ausgeführt und nicht in der Weise abgeflacht, wie der Stopfen 12 des dritten Ausführungsbeispiels gemäß den Figuren 6a und 6b. Im Übrigen stimmen das vierte Ausführungsbeispiel und das fünfte Ausführungsbeispiel überein.

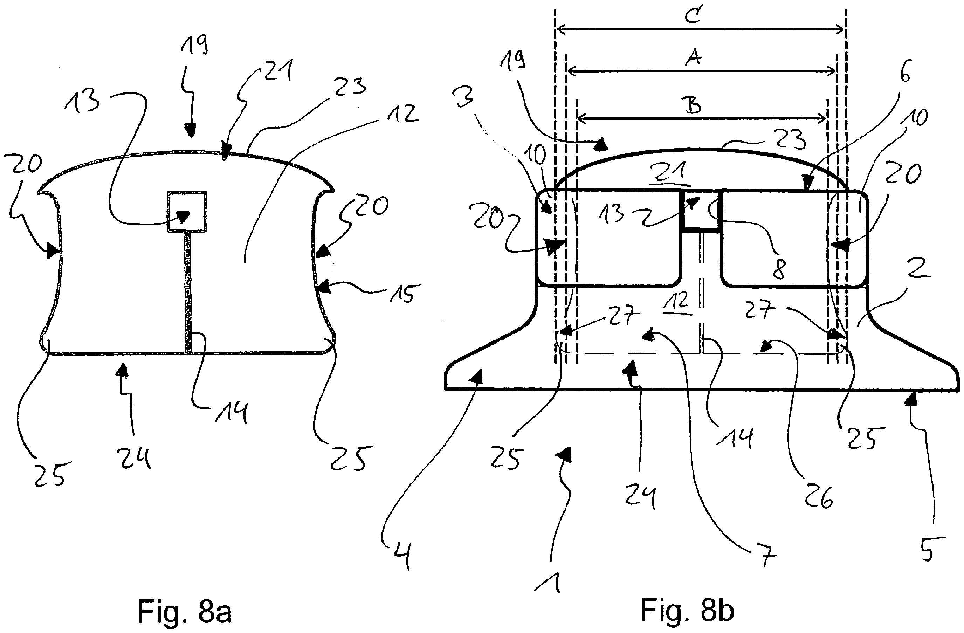

In den Figuren 8a und 8b ist ein sechstes Ausführungsbeispiel eines Brackets 1 verdeutlicht. Der Stopfen 12 dieses Brackets 1 hat einerseits wie der Stopfen 12 der vierten und fünften Ausführungsbeispiele gemäß den Figuren 6a bis 7b einen wulstartigen Vorsprung und andererseits eine Abdeckung 23, die über den Rand 11 der Aufnahmeöffnung 6 der Aufnahme 3 hinausgeht. Der Stopfen 12 des fünften Ausführungsbeispiels gemäß den Figuren 8a und 8b hat somit zwischen der Abdeckung 23 und dem wulstartigen Vorsprung 25 eine Taillierung 20, die vorliegend abgerundet ausgebildet ist, und besteht aus elastischem Material. Die Abmessung A der Aufnahmeöffnung 6, die Abmessung B des Hauptteils des Stopfens 12, d.h. im minimalen Weitenbereich der Taillierung 20, und die Abmessung C des Stopfens 12 im Bereich der Vorsprünge 25 sind der Figur 8b zu entnehmen.

Nachfolgend werden noch einige einzelne Merkmals- und Gestaltungsmöglichkeiten erläutert, die bei entsprechenden Ausführungsbeispielen umgesetzt sein können.

Statt den gesamten Stopfen 12 mit Vorsprung oder Vorsprüngen 25 aus elastischem Material herzustellen, kann auch eine Gestaltung realisiert sein, bei der nur der Vorsprung/die Vorsprünge 25 aus einem elastischen Material besteht/bestehen. Der Vorsprung 25 muss auch nicht wulstartig den gesamten Stopfen umgeben, sondern kann sich ganz oder teilweise über den Stopfenrand 15 erstrecken. Es ist auch nicht erforderlich, dass zwei Vorsprünge 25 vorgesehen sind, sondern es kann auch nur ein Vorsprung 25 realisiert sein.

Grundsätzlich ist es ausreichend, nur zu vorhandenen Vorsprüngen 25 und zu deren konkreten Anordnung und Ausgestaltung passende Erweiterungen 27 im Aufnahmeraum 7 vorzusehen. Jedoch ist es vorteilhaft, wenn beispielsweise ein Stopfen 12 mit nur einem Vorsprung 25 an einer Stelle des Stopfenrandes 15 vorgesehen ist, Erweiterungen 27 dennoch symmetrisch im Aufnahmeraum 7 auszugestalten, damit die Ausrichtung des Stopfens 12 beim Einsetzen in die Aufnahme 3 unbeachtlich ist.

Wenn aber Stopfen 12 mit speziellen Eigenschaften verwendet werden sollen, wozu ein Einbringen eines solchen Stopfens 12 in die Aufnahme 3 nur in einer einzigen vorgegebenen Orientierung möglich oder sinnvoll ist, kann beispielsweise ein einzelner Vorsprung 25 mit einer einzelnen Erweiterung 27 gepaart das Einsetzen des Stopfens 12 in die Aufnahme 3 in richtiger Orientierung sicherstellen. Entsprechend können aber auch beispielsweise Paare von speziell geformten Vorsprüngen 25 und Erweiterungen 27 gewünschte Orientierungen eines Stopfens 12 in einer Aufnahme 3 sicherstellen.

Statt zwei einander gegenüberliegenden elastischen Abschnitten 16 oder Federzungen 17 kann auch nur eine solche Ausgestaltung vorgesehen sein.

Bei der weiter oben angegebenen rechteckigen Form der Aufnahmeöffnung 6 handelt es sich lediglich um ein Beispiel. Insbesondere kann diese Form und entsprechend passend der Querschnitt des Stopfens 12 auch z.B. linsenartig mit konkaver, konvexer oder konkav-konvexer Ausgestaltung sein. Aber auch andere symmetrische oder asymmetrische Formen sind möglich, wobei bei asymmetrischen Formen eine spezifische Orientierung des Stopfens 12 zur Aufnahme 3 sichergestellt werden kann.

Der Durchgang 13 in dem Stopfen 12 muss nicht zwingend einen eckigen oder gar rechteckigen Querschnitt haben. Ein solcher Querschnitt ist dann vorteilhaft oder notwendig, wenn ein Zahnspangendraht 9 mit entsprechendem Querschnitt verwendet wird. Um eine Torsion oder Drehung des Zahnspangendrahtes 9 durch die Stellung eines Durchganges 13 mit eckigem oder gar rechteckigem Querschnitt sicher zu stellen, kann in vorteilhafter Weise zusätzlich zu der eckigen Ausgestaltung des Durchgangs 13 vorgesehen werden, dass der Durchgang 13 des Stopfens 12 von einem unelastischen Material umgeben ist, selbst wenn der Stopfen 12 im Übrigen aus elastischem Material besteht.

Insbesondere in Verbindung mit elastischen Abschnitten 16 im Rand 11 um die Aufnahmeöffnung 6 herum, speziell in Verbindung mit Federzungen 17, kann in vorteilhafter Weise vorgesehen werden, dass der Stopfenrand 15 eines scheibenartigen Stopfens 12 mit Rastungen, wie beispielsweise Nuten, Rillen oder Graten (nicht gezeigt) versehen ist, womit freie Enden der elastischen Abschnitte 16 oder Federzungen 17 in Eingriff kommen können, um einen besonders festen Halt zu gewährleisten. Zu diesem Zweck können die elastischen Abschnitte 16 oder Federzungen 17 an ihren Eingriffsenden mit Vorsprüngen, Rippen, Zahnungen oder dergleichen (nicht gezeigt) versehen sein.

Allen vorstehend anhand den Figuren der Zeichnung erläuterten Brackets 1 ist gemeinsam, dass die Stopfen 12 zumindest in dem Bereich, der nach ihrem Einsetzen der Aufnahme 3 aus letzterer herausragt, eine wenigstens im Wesentlichen glatte Sichtoberfläche haben. Insbesondere bei kappenartigen Abdeckungen 23 ist es von besonderem Vorteil, wenn ihre Sichtoberfläche eine zumindest im Wesentlichen glatte Sichtseite außerhalb der Aufnahme 3 hat, wenn der entsprechende Stopfen 12 in die Aufnahme 3 eingesetzt ist. Ferner kann die Sichtoberfläche oder die Sichtseite eben oder insbesondere konvex gekrümmt sein, so dass sich beim Tragen des Brackets 1 bzw. einer damit ausgestatteten Zahnspange (nicht gezeigt) zu den Lippen (nicht gezeigt) hin ein angenehmes Tragegefühl ergibt und Kanten vermieden sind. Es ist in diesem Zusammenhang auch möglich, dass der Stopfen 12 aus elastischem Material eine Ausgestaltung hat, so dass er, wenn er in die Aufnahme 3 eingesetzt ist, die letztere auch vollständig umgibt, so dass der Träger (nicht gezeigt) eines solchen Brackets 1 bzw. einer damit ausgestatteten Zahnspange (nicht gezeigt), nur die glatte und weiche Oberfläche des Stopfens 12 spürt. Eine solche Ausgestaltung führt auch in besonders gutem Umfang dazu, dass an dem Sockel 2 sowie zwischen dem Sockel 2 und dem Stopfen 12 eher keine Verunreinigungen zurückbleiben können, was der Zahnhygiene besonders zugute kommt. Dieser Effekt wird aber auch schon mit kappenartigen Abdeckungen 23 und ansonsten glatt verarbeiteten Sockeln 2 in gegenüber Brackets mit Alastics nach dem Stand der Technik wesentlich besserem Umfang erreicht.

In den Zeichnungen nicht gesondert dargestellt, aber für jeden Fachmann ohne weiteres verständlich, ist, dass eine Zahnspange (nicht gezeigt) mit den erfindungsgemäßen und insbesondere in den einzelnen Ausführungsbeispielen konkretisierten Brackets 1 und einem Zahnspangendraht 9 realisiert werden kann. Beim Montieren der Zahnspange werden zunächst die Brackets 1 in üblicher Weise an der Außenseite oder auch an die Innenseite der Zähne (nicht gezeigt) des betroffenen Kiefers (nicht gezeigt) insbesondere mittels eines geeigneten und in der Zahntechnik und Kieferorthopädie gut bekannten Klebers (nicht gezeigt) in gewünschten Stellungen befestigt. In besonders vorteilhafter Weise können dann Stopfen 12 mittels ihrer Einführungsschlitze 14 auf einen Zahnspangendraht 9 gesteckt werden, so dass letzterer durch die Durchgänge 13 der Stopfen 12 hindurch geht. Dabei ist es möglich, einen Stopfen 12 nach dem anderen an den Zahnspangendraht 9 anzubringen, wenn der vorhergehende Stopfen 12 in die jeweils zugehörige Aufnahme 3 eingesetzt wurde, oder aber eine Anzahl von Stopfen 12 von vornherein an dem Zahnspangendraht 9 anzubringen und nacheinander in die jeweils zugehörigen Aufnahmen 3 zu drücken.

Das erfindungsgemäße Bracket 1 kann in vorteilhafter Weise kleiner als herkömmliche Brackets gestaltet werden, was auch in besonderer Weise das Anbringen der Brackets 1 an den Innenflächen (nicht gezeigt) der Zähne (nicht gezeigt) ermöglicht, da eine Störung der Zunge (nicht gezeigt) des Trägers (nicht gezeigt) der Zahnspange damit minimal ausfallen kann. Als Material für den Sockel 2 des erfindungsgemäßen Brackets 1 können metallische Materialien, Keramiken und Kunststoffe verwendet werden, wobei diese insbesondere farblich an die Zahnfarbe angepasst gewählt werden können. Dasselbe gilt für die farbliche Gestaltung der Stopfen 12 aus elastischen oder unelastischen oder Kompositmaterialien.

Die Montageseite 5 ermöglicht es, dass, indem sie geeignet nachbearbeitet und angepasst werden kann, eine besonders gute Passung an die Zahnoberfläche erzielt werden kann, an der das Bracket 1 dann besonders gut haftet. Sockel 2 für die Brackets 1 können so als Standardteile in großer Stückzahl kostengünstig hergestellt werden, da eine individuelle Anpassung unmittelbar vor dem Anbringen an einem Zahn (nicht gezeigt) erfolgen kann.

Die Befestigung des Stopfens 12 in dem Aufnahmeraum 7 der Aufnahme 3 kann durch sowohl Formschluss als auch Kraftschluss oder beides erzielt werden. Für die Variante mit bloßem Kraftschluss sollten das elastische Kunststoffmaterial des Stopfens 12 geeignet gewählt und der Stopfen 12 geeignet geformt und dimensioniert werden. Entsprechende Ausgestaltungen kann der Fachmann ohne weiteres und insbesondere ohne selbst erfinderisch tätig werden zu müssen ermitteln und festlegen.

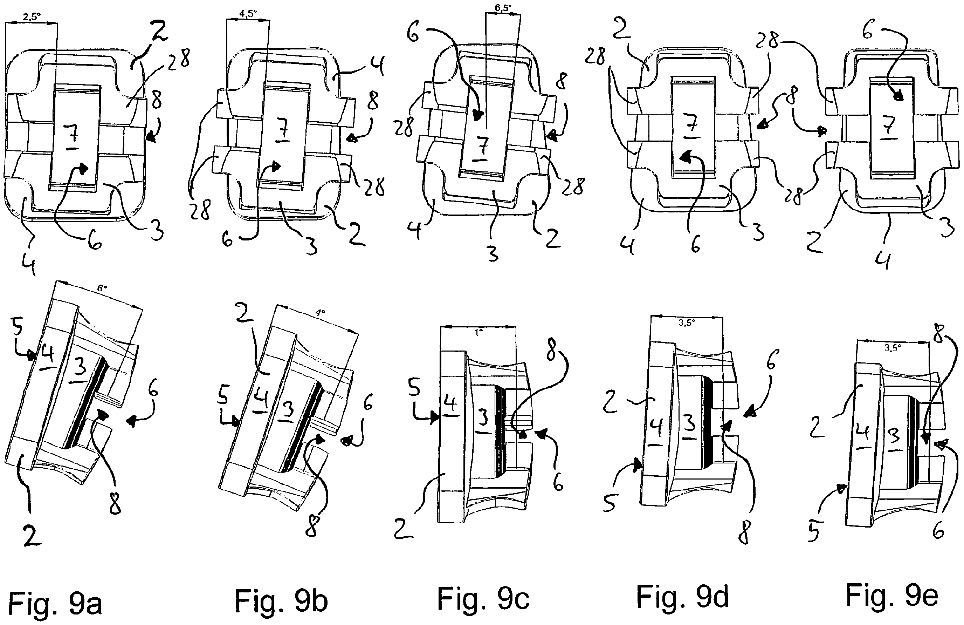

Die Fig. 9a, 9b, 9c, 9d und 9e zeigen jeweils in einer Draufsicht und in einer Seitenansicht entsprechend von einem siebten, achten, neunten, zehnten und elften Ausführungsbeispiel eines kieferorthopädischen Brackets 1 den Sockel 2 alleine. Diese Ausführungsbeispiele dienen dazu, exemplarisch die Möglichkeiten von verschiedenen Torque- und Angulationswinkeln zu verdeutlichen, die im Sockel 2 realisiert sein können, um eine optimale Anpassung an die Gegebenheiten des Gebisses und Erfordernisse der Behandlung zu gewährleisten. Außer den gezeigten Geometrien können auch jegliche andere Geometrien entsprechend Gegebenheiten des Gebisses und Erfordernisse der Behandlung vorgesehen werden. Der erfinderische Gedanke ist dadurch gegeben, dass grundsätzlich verschiedene Sockel 2 mit jeweils individuellen Torque- und Angulationswinkeln bereitgestellt werden.

Die jeweiligen Daten bei den in den Fig. 9a, 9b, 9c, 9d und 9e gezeigten Sockeln 2 sind:
Fig. 9a, siebtes Ausführungsbeispiel:
   Torque +6°, Angulation +2,5°
Fig. 9b, achtes Ausführungsbeispiel:
   Torque +4°, Angulation +4,5°
Fig. 9c, neuntes Ausführungsbeispiel:
   Torque -1°, Angulation +6,5°
Fig. 9d, zehntes Ausführungsbeispiel:
   Torque 0°, Angulation -3,5°
Fig. 9e, elftes Ausführungsbeispiel:
   Torque 0°, Angulation - 3,5°

Die zehnten und elften Ausführungsbeispiele Fig. 9d und 9e unterscheiden sich dadurch, dass die Montageseite 5 der Basis 4 des Sockels 2 unterschiedlich dimensioniert sind, was eine gezielte und optimal passende Anwendung an unterschiedlich großen Zähnen eines Patienten oder in Hinblick auf die Größenunterschiede der Zähne verschiedener Patienten ermöglicht. Wie durch Vergleich der Abbildungen in den Fig. 9d und 9e leicht und deutlich zu erkennen ist, ist die Montageseite 5 der Basis 4 des Sockels 2, der in der Fig. 9e gezeigt ist, "schlanker" als die Montageseite 5 der Basis 4 des Sockels 2, der in der Fig. 9d gezeigt ist, so dass der Sockel 2 gemäß de, elften Ausführungsbeispiel nach der Fig. 9e gut für schmälere Zähne geeignet ist.

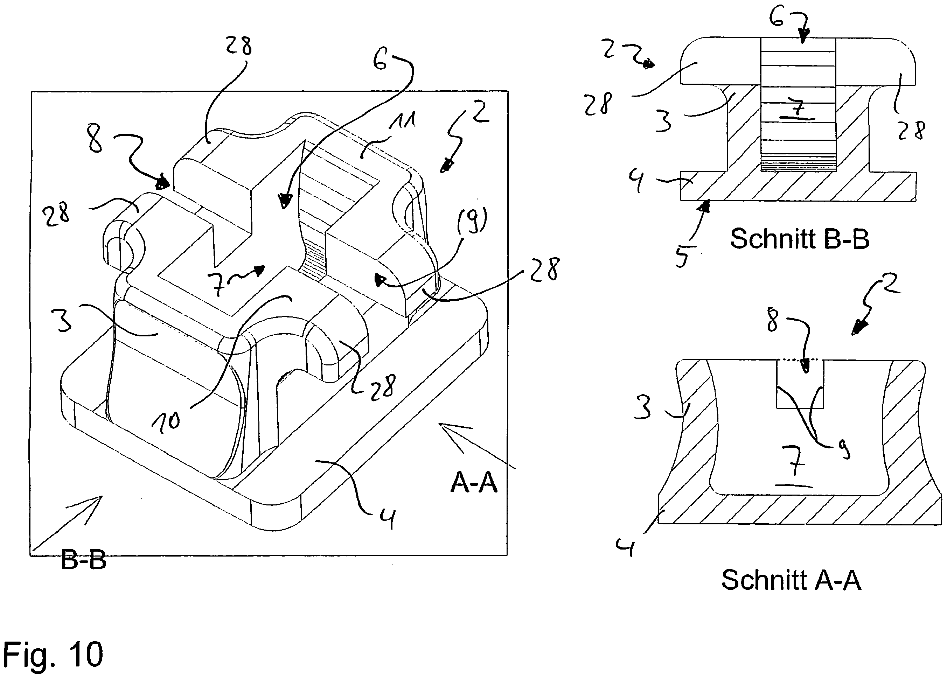

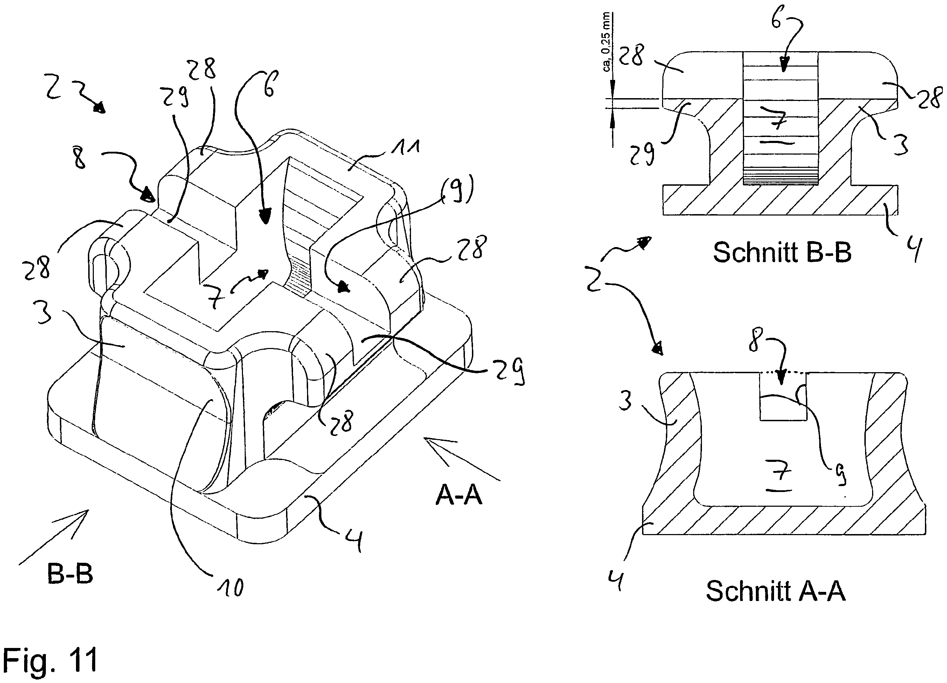

Die Fig. 10 und 11 zeigen entsprechend jeweils schematisch in einer perspektivischen Ansicht, einer Längsschnittsansicht (in Richtung des Pfeils A-A betrachtet) und in einer Querschnittsansicht (in Richtung des Pfeils B-B betrachtet) von einem zwölften und einem dreizehnten Ausführungsbeispiel eines kieferorthopädischen Brackets 1 den Sockel 2 alleine. Der Unterschied zwischen den beiden ansonsten identischen Ausgestaltungen wird bei Betrachtung der Querschnitte (oben rechts in den Darstellungen), aber auch in den perspektivischen Ansichten deutlich.

Der Aufnahmeschlitz 8 ist nicht nur durch eine entsprechende Durchbrechung der Wand 10 des Sockels 2 bestimmt, sondern auch noch durch den Aufnahmeschlitz 8 seitlich verlängernde Vorsprünge 28, die auch bei den siebten bis elften Ausführungsbeispielen gemäß den Fig. 9a bis 9e vorgesehen und in den entsprechenden Abbildungen deutlich zu erkennen sind. Diese Vorsprünge 28 gewährleisten einen zusätzlichen Halt des Zahnspangendrahtes (nicht gezeigt) und damit eine bessere Übertragung der Korrekturkräfte, die durch die Lage und Formgebung des Zahnspangendrahtes (nicht gezeigt) ausgeübt werden. Während nun die seitlich des Aufnahmeschlitzes 8 liegenden Vorsprünge 28 bei dem zwölften Ausführungsbeispiel gemäß der Fig. 10 die Übertragung von Korrekturkräften in Aufwärts- und in Abwärtsrichtung bezogen auf die Zähne (nicht dargestellt) eines behandelten Kiefers (nicht dargestellt) fördern, ist bei dem dreizehnten Ausführungsbeispiel gemäß der Fig. 11 zusätzlich ein Steg 29 zwischen zwei den Aufnahmeschlitz 8 seitlich verlängernden Vorsprüngen 28 vorgesehen. Der Steg 29 verlängert die Auflage des Zahnspangendrahtes in Richtung zu den Zähnen (nicht dargestellt) hin, und unterstützt dadurch die Übertragung von Korrekturkräften senkrecht zu den äußeren Zahnoberflächen.

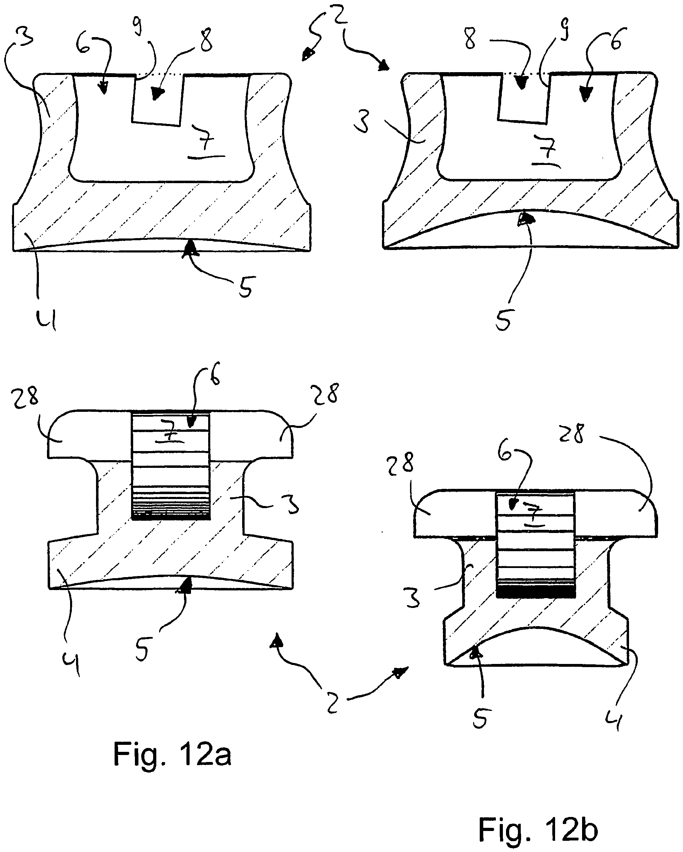

In den Fig. 12a und 12b sind entsprechend jeweils schematisch in einer Längsschnittsansicht und in einer Querschnittsansicht, die analog zu den Längsschnittsansichten und Querschnittsansichten der Fig. 10 und 11 liegen, von seinem vierzehnten und einem fünfzehnten Ausführungsbeispiel eines kieferorthopädischen Brackets 1 je die Sockel 2 alleine gezeigt. Die Besonderheit der Sockel 2 dieser beiden Ausführungsbeispiele ist, dass die jeweilige Montageseite 5 konkav einwärts gekrümmt ist, und zwar bei dem fünfzehnten Ausführungsbeispiel gemäß der Fig. 12b mehr oder tiefer, wie beispielsweise zur anatomischen Anpassung an einen Backenzahn oder Eckzahn, als gemäß der Fig. 12a bei dem vierzehnten Ausführungsbeispiel, das der anatomischen Anpassung z.B. an einen Schneidezahn gerecht wird.

Noch weiter ist anhand der Längsschnittsansichten von dem vierzehnten und dem fünfzehnten Ausführungsbeispiel in den Fig. 12a und 12b (die jeweils obere Abbildung) zu sehen, dass der Aufnahmeschlitz 8 nicht einen "senkrecht" zum Rand 11 der Wand 10 der Basis 4 des Sockels des Brackets 1 ausgerichteten rechwinkligen Querschnitt hat, sondern dass dieser Querschnitt schräg gekippt ausgerichtet ist. Damit kann eine entsprechende Lage eines Zahnspangendrahtes 9 mit entsprechendem Querschnitt fixiert werden, so dass der Zahnspangendraht 9 optimal wirken kann.

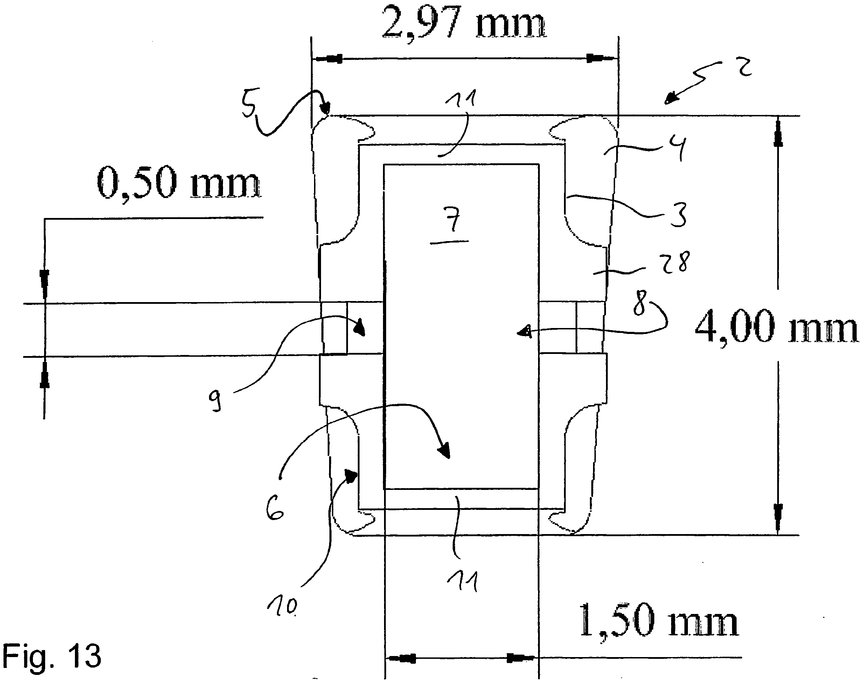

Anhand eines sechzehnten Ausführungsbeispiels eines kieferorthopädischen Brackets 1 sind in der Fig. 13 exemplarisch Abmessungsdaten für ein solches Bracket 1 offenbart. Das Bracket 1 hat einen Sockel 2, der trapezförmig ist und in der Durchgangsrichtung des Zahnspangendrahtes 9 an der breiteren Seite des Trapezes 2,97 mm an der Montageseite 5 misst. Als Zahnspangendraht 9 ist ein solcher mit quadratischem Querschnitt mit einer Kantenlänge von 0,50 mm verwendet, was bedeutet, dass der Aufnahmeschlitz 8 im Wesentlichen dieselbe Breite oder genauer gesagt eine nur geringfügig größere Breite hat, so dass der Zahnspangendraht 9 zwar in den Aufnahmeschlitz 8 ohne Klemmen eingeführt werden, sich darin aber nicht frei verdrehen kann. Die Aufnahmeöffnung 6 und der Aufnahmeraum 7 haben jeweils eine Abmessung in der Durchgangsrichtung des Zahnspangendrahtes. 9 von 1,50 mm, und die Abmessung der Montageseite 5 des Sockels 2 des Brackets 1 quer zur Durchgangsrichtung des Zahnspangendrahtes 9 beträgt 4,00 mm. Wie angegeben, handelt es sich um beispielhafte Größenangaben, die lediglich eine Vorstellung vermitteln sollen, um welche Dimensionen es bei dem erfindungsgemäßen Bracket geht.

Im Rahmen eines siebzehnten Ausführungsbeispiels ist in der Fig. 14 ein Stopfen 12 schematisch in einer perspektivischen Ansicht gezeigt. Der Stopfen 12 gemäß der Fig. 14 ist dem Grunde nach ähnlich dem Stopfen 12, der bei dem sechsten Ausführungsbeispiel in den Fig. 8a und 8b gezeigt ist. Bei dem früheren sechsten Ausführungsbeispiel hat der Stopfen 12 quer zu seiner Höhenabmessung, d.h. in seiner Einführ- oder Einsetzrichtung bezogen auf den Sockel 2, einen Einführungsschlitz 14, der vom Stopfenrand 15 bis zum Durchgang 13 des Stopfens reicht (siehe Fig. 8a). Der Einführungsschlitz 14 dient dazu, dass der Stopfen 12 auf einen Zahnspangendraht 9 durch den Einführungsschlitz 14 aufgesteckt werden kann, ohne dass der Durchgang 13 des Stopfens 12 auf den Zahnspangendraht 9 aufgefädelt werden und über eine größere Länge des Zahnspangendrahtes 9 bis zu der Stelle geschoben werden muss, wo er in die Aufnahme 3 des zugehörigen Brackets 1 eingedrückt werden kann.

Der Einführungsschlitz 14 gemäß dem sechsten Ausführungsbeispiel in den Fig. 8a und 8b (aber auch allen Figuren davor) ist schmäler als der Durchgang 13 des Stopfens 12. Dies bedeutet bei dem sechsten Ausführungsbeispiel, dass der jeweilige Stopfen 12 auf einen Zahnspangendraht 9 aufgesteckt werden kann und, da sich der Einführungsschlitz 14 zumindest wieder bis in eine Ausgangsstellung schließt, in der der Einführungsschlitz 14 schmäler als der Durchgang 13 des Stopfens 12 ist, nachdem der Zahnspangendraht 9 vollständig bis in den Durchgang 13 durch den Einführungsschlitz 14 hindurch geschoben wurde. Bei entsprechend geschlossenem Einführungsschlitz 14 umgreift der Durchgang 13 den Zahnspangendraht 9 also zumindest im wesentlichen vollständig. Für die Ausgestaltung gemäß dem sechsten Ausführungsbeispiel in den Fig. 8a und 8b ist also eine Eigenelastizität (oder zumindest Verformbarkeit) des Stopfens 2 zumindest in so weit erforderlich, dass sich der Einführungsschlitz 14 zur Durchführung des Zahnspangendrahtes 9 aufweitet, bis letzterer im Durchgang 13 sitzt, und sich dann beispielsweise selbsttätig wieder zumindest im Wesentlichen in seine Ausgangsgestalt schließt (das Schließen kann auch durch das Eindrücken des Stopfens 12 in den Aufnahmeraum 7 des Sockels 2 erfolgen oder begünstigt werden).

Im Vergleich zu dem Einführungsschlitz 14 gemäß dem sechsten Ausführungsbeispiel in den Fig. 8a und 8b, welcher Einführungsschlitz 14 schmäler als der zugehörige Durchgang 13 ist, ist der Einführungsschlitz 14 des siebzehnten Ausführungsbeispiels in der Fig. 14 vom Durchgang 13 zum Stopfenrand 15 V-förmig aufgeweitet. Dies erleichtert die Einführung eines Zahnspangendrahtes (nicht dargestellt) in den Durchgang 13, oder ein Zahnspangendraht (nicht dargestellt) kann in den Aufnahmeschlitz 8 des Sockels 2 eingelegt und in dieser Stellung durch Einsetzen des Stopfens 12 gemäß dem sechsten Ausführungsbeispiel in den Fig. 8a und 8b durch die Aufnahmeöffnung 6 in den Aufnahmeraum 7 fixiert werden. In beiden Fällen erleichtert die V-förmige Aufweitung des Einführungsschlitzes 14 gleichsam das Einfädeln des Zahnspangendrahtes (nicht dargestellt). Besonders vorteilhaft, aber nicht darauf beschränkt ist die Gestaltung des Stopfens 12 gemäß dem siebzehnten Ausführungsbeispiel in der Fig. 14, wenn der Stopfen 12 nicht selbst zumindest weitgehend aus einem elastischen Material besteht, also insbesondere mit einem Sockel 2 verwendet wird, der einen elastischen Abschnitt 16, wie z.B. eine Federzunge 17, aufweist, wie beispielsweise bei dem zweiten Ausführungsbeispiel gemäß den Fig. 2a bis 2d vorgesehen und gezeigt ist.

Die Gestaltung des Stopfens 12 gemäß der Fig. 14 ist im Übrigen entsprechend der Gestaltung des Stopfens 12 gemäß den Fig. 8a und 8b.

In der Fig. 15 ist im Rahmen eines achtzehnten Ausführungsbeispiels schematisch in einer perspektivischen Ansicht ein weiterer Stopfen 12 gezeigt, der bis auf einen Knauf 30 mit dem Stopfen 12 gemäß der Fig. 14 überein stimmt. Der Knauf 30 dient der Handhabbarkeit des Stopfens 12 insbesondere bei dessen Einsetzung in den Aufnahmeraum 7 des Sockels 2. An dem Knauf 30 kann der Stopfen 12 nämlich leicht gegriffen sowie ausgerichtet und positioniert werden. Damit wird die Einsetzarbeit des Stopfens 12 in den Aufnahmeraum 7 des Sockels 2 wesentlich vereinfacht und erleichtert.

Wenn der Stopfen 12 mit dem Zahnspangendraht 9 oder auf schon in den Aufnahmeschlitz 8 eingelegten Zahnspangendraht 9 richtig und vollständig eingesetzt ist, kann der Knauf 30 entfernt werden. Dies kann beispielsweise durch eine Solltrennstelle des Knaufs 30 erfolgen, welche Solltrennstelle am Fuß 31 des Knaufs 30, also dort, wo der Knauf 30 an dem Abflachungsbereich 19 des Stopfens 12 anschließt. Eine solche Solltrennstelle kann durch eine Materialschwächung realisiert sein. Wird der Knauf 30 bei richtig und vollständig in den Aufnahmeraum 7 des Sockels - eingesetztem Stopfen 12 zwischen Daumen und Zeigefinger gegriffen und gedreht, so löst er sich an der Solltrennstelle am Fuß 31 des Knaufs 30 von dem Abflachungsbereich 19 des Stopfens 12 ab. Eine eventuelle Unebenheit kann nachher abgeschliffen werden. Es ist auch möglich, den Knauf 30 an seinem Fuß 31 mit einem Werkzeug, wie beispielsweise einer Zange, einem Messer oder einer Fräse oder Säge, insbesondere elektrisch, hydraulisch oder pneumatisch betrieben, von dem Abflachungsbereich 19 des Stopfens 12 abzutrennen und vorzugsweise dabei gleichzeitig die Trennstelle an dem Abflachungsbereich 19 des Stopfens 12 zu glätten.

Trotz der zusätzlichen Arbeiten zum Entfernen des Knaufs 30 und eventuell zum Glätten der Trennstelle an dem Abflachungsbereich 19 des Stopfens 12 kann die Verwendung von Stopfen 12 mit Knauf 30 eine Arbeitserleichterung bedeuten, da gerade das Ausrichten, Positionieren und Einsetzen des Stopfens 12 durch den Knauf 30 wesentlich erleichtert wird, und das Entfernen des Knaufs 30 und eventuell Glätten der Trennstelle an dem Abflachungsbereich 19 des Stopfens 12 an dem an einem Zahn (nicht gezeigt) fixierten Bracket 1 eine relativ einfache und sichere Arbeit ist. Statt des Knaufs 30 können auch andere Ausgestaltungen, wie beispielsweise Haken oder Teller, vorgesehen sein.

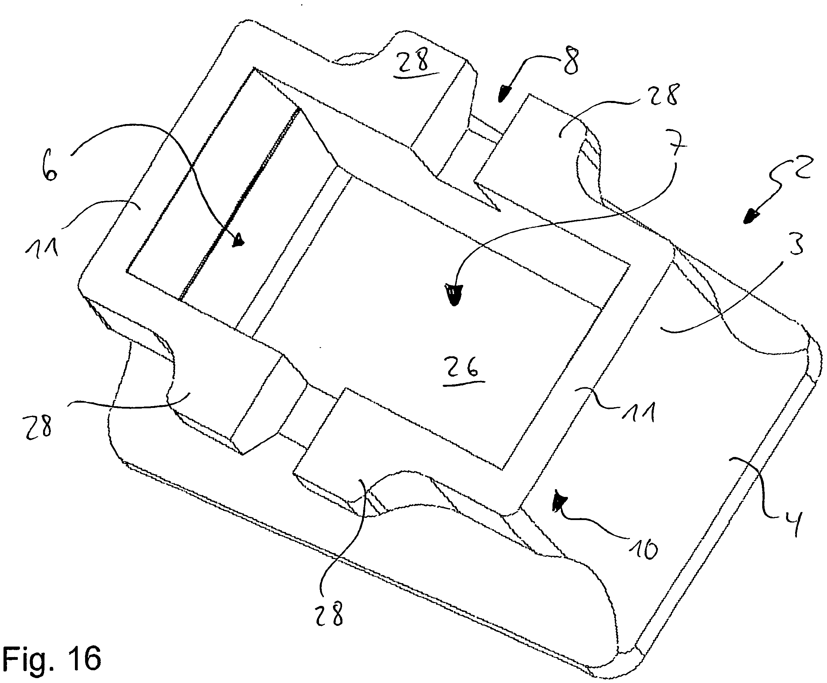

Die schematische perspektivische Darstellung eines Sockels 12 eines Brackets 1 gemäß einem neunzehnten Ausführungsbeispiel in der Fig. 16 dient der weiteren Veranschaulichung einiger Merkmale der vorher schon behandelten Ausführungsbeispiele und zeigt selbst noch geometrische Gestaltungsmerkmale, die der Fig. 16 selbst zu entnehmen sind.

Für sämtliche Ausführungsbeispiele - und in so weit wird auf alle vorstehenden schriftlichen Angaben sowie alle Figuren der Zeichnung Bezug genommen - und die Erfindung im Allgemeinen, wie sie in der Beschreibungseinleitung und in den Ansprüchen bestimmt ist, gibt es weitere vorteilhafte Ausgestaltungen, die nachfolgend näher erläutert werden.

So können/kann der Stopfen 12, insbesondere zumindest dessen aus dem Sockel 2 herausragender Teil, und/oder die Oberfläche des Sockels 2 selbst, soweit diese Oberfläche bei an einem Zahn (nicht gezeigt) angebrachtem Bracket 1 und eingesetztem Stopfen 12 mit Zahnspangendraht 9 frei liegt, eine so genannte Nanobeschichtung aufweisen, die insbesondere dahingehend optimiert ist, dass auf den entsprechenden Oberflächen kein Schmutz, wie insbesondere Zahnstein oder Konkremente, haften bleiben kann. Diese Nanotechnologie ist für sich bekannt, so dass bezüglich Einzelheiten auf die entsprechende Literatur und Fachkenntnisse verwiesen wird. Die Grundsätze gemäß der einschlägigen Literatur gelten damit als in den vorliegenden Unterlagen offenbart. Es ist als Erfindungsgedanke anzusehen, dass die grundsätzlich bekannte Nanotechnologie nunmehr neu auf dem vorliegenden technischen Gebiet auf den vorbeschriebenen Oberflächen zum Einsatz kommt.

Der Sockel kann aus verschiedenen Materialien bestehen, indem insbesondere der Sockel 2 im Bereich der Drahtführung, d.h. um den Aufnahmeschlitz 8 herum, hart und die Klebefläche, d.h. das Material, das die Montageseite 5 bestimmt, die auf den Zahn (nicht gezeigt) kommt, weich sein kann.

Der Sockel 2 des Brackets 1 kann materialmäßig so gestaltet sein, dass in Verbindung mit einem anderen Material, z.B. des Drahtbogens, d.h. des Zahnspangendrahtes 9, eine elektrische Spannung entsteht, die wiederum eine Reaktion des Drahtbogens hervorruft.

Auch kann der Sockel 2 oder zumindest dessen die Montageseite 5 aus einem Kunststoff bestehen, der durch ganz bestimmte UV-Strahlen aushärtet. D.h., dass der Sockel 2 im weichen Zustand auf einen Zahn (nicht gezeigt) aufgebracht werden kann, so dass sich insbesondere die Klebefläche oder die Montageseite 5 der Zahnfläche anpasst. Danach wird der optimal an die Zahnoberfläche angepasste und auf den Zahn aufgesetzte Sockel 2 durch UV-Bestrahluna fertig ausgehärtet.

Die Erfindung ist anhand der Ausführungsbeispiele in der Beschreibung und in der Zeichnung lediglich exemplarisch dargestellt und nicht darauf beschränkt, sondern umfasst alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele und deren Darstellungen in der Zeichnung entnehmen und mit seinem fachmännischen Wissen sowie dem Stand der Technik, insbesondere den Offenbarungsgehalten der eingangs angegebenen eigenen Vorveröffentlichungen kombinieren kann. Insbesondere sind alle einzelnen Merkmale und Ausgestaltungsmöglichkeiten der Erfindung und ihrer Ausführungsvarianten kombinierbar.

### Bezeichnungen

- 1: Bracket
- 2: Sockel
- 3: aufnahme
- 4: Basis
- 5: Montageseite
- 6: Aufnahmeöffnung
- 7: Aufnahmeraum
- 8: Aufnahmeschlitz
- 9: Zahnspangendraht
- 10: Wand
- 11: Rand
- 12: Stopfen
- 13: Durchgang
- 14: Einführungsschlitz
- 15: Stopfenrand
- 16: elastischer Abschnitt
- 17: Federzunge
- 18: Haken
- 19: Abflachungsbereich
- 20: Taillierung
- 21: Kopfbereich
- 22: Durchbruch
- 23: Abdeckung
- 24: Einführungsende
- 25: Vorsprung
- 26: Boden
- 27: Erweiterung
- 28: Vorsprünge
- 29: Steg
- 30: Knauf
- 31: Fuß
- A: Abmessung Aufnahmeöffnung
- B: Abmessung des Stopfens parallel zur Abmessung der Aufnahmeöffnung
- C: Abmessung des Stopfens mit Vorsprüngen parallel zur Abmessung der Aufnahmeöffnung
- D: Drahtachse

## Patentansprüche

1. Kieferorthopädisches Bracket (1) mit einem Sockel (2), der zum Halten eines Zahnspangendrahtes (9) an einem Zahn anbringbar ist, und einer Halterung zum Halten des Zahnspangendrahtes in dem Sockel (2), **dadurch gekennzeichnet, dass** die Halterung ein Stopfen (12) aus einem elastischen Material, insbesondere einem Material, das Gummi oder Silikon enthält, ist, der einen Durchgang (13) für den Zahnspangendraht (9) hat, und dass der Sockel (2) eine Aufnahme (3) mit einer Aufnahmeöffnung (6) aufweist, durch die der Stopfen (12) in die Aufnahme (3) einsetzbar ist, wobei der in der Aufnahme (3) eingesetzte Stopfen (12) die Aufnahmeöffnung (6) formschlüssig hintergreift, und wobei der Durchgang (13) des Stopfens (12) von einem unelastischen Material umgeben ist.

2. Kieferorthopädisches Bracket (1) nach Anspruch 1, **dadurch gekennzeichnet, dass** der Stopfen (12) zum Einführen eines Zahnspangendrahtes (9) einen Einführungsschlitz (14) hat, der von der Außenseite (Stopfenrand 15) bis zum Durchgang (13) reicht.

3. Kieferorthopädisches Bracket (1) nach einem der vorhergehenden Ansprüche, **dadurch gekennzeichnet, dass** der Stopfen (12) wenigstens zwei zumindest im Wesentlichen parallel beabstandete Durchgänge (13) hat, in die ein Zahnspangendraht (9) wahlweise eingeführt werden kann.

4. Kieferorthopädisches Bracket (1) nach einem der vorhergehenden Ansprüche, **dadurch gekennzeichnet, dass** der Durchgang (13) des Stopfens (12) einen eckigen, insbesondere rechteckigen Querschnitt hat.

5. Kieferorthopädisches Bracket (1) nach einem der vorhergehenden Ansprüche, **dadurch gekennzeichnet, dass** der Stopfen (12) scheibenartig ist und der Durchgang (13) in Dickenrichtung verläuft.

6. Kieferorthopädisches Bracket (1) nach einem der vorhergehenden Ansprüche, **dadurch gekennzeichnet, dass** der Stopfen (12) scheibenartig ist und an seiner Umfangsfläche (15) Rastungen zum Eingriff in die Aufnahme (3) des Sockels (2) enthält.

7. Kieferorthopädisches Bracket (1) nach einem der vorhergehenden Ansprüche, **dadurch gekennzeichnet, dass** die Aufnahme (3) einen Aufnahmeschlitz (8) zum Einlegen und Ausrichten des Zahnspangendrahtes (9) hat, und dass der Durchgang (13) in dem Stopfen (12), wenn letzterer in die Aufnahme (3) eingesetzt ist, mit dem Aufnahmeschlitz (8) in der Aufnahme (3) ausgerichtet ist.

8. Kieferorthopädisches Bracket (1) nach Anspruch 7, **dadurch gekennzeichnet, dass** der Aufnahmeschlitz (8) zum Einlegen und Ausrichten des Zahnspangendrahtes (9) durch bezüglich des Sockels (2) auswärts weisende seitliche Vorsprünge (28) flankiert ist.

9. Kieferorthopädisches Bracket (1) nach Anspruch 7 oder 8, **dadurch gekennzeichnet, dass** sich an den Aufnahmeschlitz (8) zum Einlegen und Ausrichten des Zahnspangendrahtes (9) wenigstens ein bezüglich des Sockels (2) auswärts weisender, einen in den Aufnahmeschlitz (8) eingelegten Zahnspangendraht (9) zum Zahn hin abstützender vorspringender Steg (29) anschließt.

10. Kieferorthopädisches Bracket (1) nach einem der Ansprüche 7 bis 9, **dadurch gekennzeichnet, dass** der Aufnahmeschlitz (8) zum Einlegen und Ausrichten des Zahnspangendrahtes (9) bezüglich der Aufnahmeöffnung (6) der Aufnahme (3) des Sockels (2) einen schräg gekippt ausgerichteten Querschnitt für einen Zahnspangendraht (9) mit entsprechendem Querschnitt aufweist.

11. Kieferorthopädisches Bracket (1) nach einem der vorhergehenden Ansprüche, **dadurch gekennzeichnet, dass** der Sockel (2) so gestaltet ist, dass er einen vorgegebenen Torquewinkel und/oder Angulationswinkel für die Ausrichtung und Positionierung des Zahnspangendrahtes (9) gewährleistet.

12. Kieferorthopädisches Bracket (1) nach einem der vorhergehenden Ansprüche, **dadurch gekennzeichnet, dass** der Stopfen (12) einen Einführungsschlitz (14) hat, der von einem Stopfenrand (15) bis zu einem Durchgang (13) des Stopfens (12) für den Zahnspangendraht (9) reicht.

13. Kieferorthopädisches Bracket (1) nach Anspruch 12, **dadurch gekennzeichnet, dass** der Einführungsschlitz (14) insbesondere elastisch und/oder reversibel aufweitbar ist.

14. Kieferorthopädisches Bracket (1) nach Anspruch 12 oder 13, **dadurch gekennzeichnet, dass** der Einführungsschlitz (14) vom Durchgang (13) zum Stopfenrand (15) V-förmig aufgeweitet ist.

15. Zahnspange mit kieferorthopädischen Brackets (1) nach einem der vorhergehenden Ansprüche.

## Claims

1. Orthodontic bracket (1) with a base (2) which is attachable to a tooth in order to hold a brace wire (9) and a retainer for retaining the brace wire in the base (2), **characterized in that** the retainer is a plug (12) made from an elastic material, in particular a material comprising rubber or silicone, which comprises a passage (13) for the brace wire (9), and **in that** the base (2) comprises a receptacle (3) having a receptacle opening (6) through which the plug (12) can be inserted into the receptacle (3), whereby the plug (12) which is inserted into the receptacle (3) engages behind the receptacle opening (6) in a formfitting manner, and whereby the passage (13) of the plug (12) is surrounded by a non-elastic material.

2. Orthodontic bracket (1) according to claim 1, **characterized in that** the plug (12) comprises an insertion slot (14) for inserting a brace wire (9) which extends from the outside (edge of the plug 15) to the passage (13).

3. Orthodontic bracket (1) according to any one of the preceding claims, **characterized in that** the plug (12) comprises at least two essentially parallel spaced passages (13) in which a brace wire (9) can be inserted alternatively.

4. Orthodontic bracket (1) according to any one of the preceding claims, **characterized in that** the passage (13) of the plug (12) has an angular, in particular a rectangular, cross section.

5. Orthodontic bracket (1) according to any one of the preceding claims, **characterized in that** the plug (12) is disk-like and **in that** the passage (13) runs in the direction of the thickness.

6. Orthodontic bracket (1) according to any one of the preceding claims, **characterized in that** the plug (12) is disk-like and comprises on its peripheral surface (15) detents for engaging into the receptacle (3) of the base (2).

7. Orthodontic bracket (1) according to any one of the preceding claims, **characterized in that** the receptacle (3) comprises a receptacle slot (8) for inserting and aligning the brace wire (9), and **in that** the passage (13) in the plug (12) is aligned with the receptacle slot (8) in the receptacle (3) when the latter is inserted in the receptacle (3).

8. Orthodontic bracket (1) according to claim 7, **characterized in that** the receptacle slot (8) for inserting and aligning the brace wire (9) is flanked by side ledges (28) which in relation to the base (2) point outwards.

9. Orthodontic bracket (1) according to claim 7 or 8, **characterized in that** the receptacle slot (8) for inserting and aligning the brace wire (9) is adjoined by at least one protruding bar (29) which in relation to the base (2) points outward and braces a brace wire (9) inserted into the receptacle slot (8) against the tooth.

10. Orthodontic bracket (1) according to any one of claims 7 to 9, **characterized in that** the receptacle slot (8) for inserting and aligning the brace wire (9) comprises in relation to the receptacle opening (6) of the receptacle (3) of the base (2) a slantedly tiltedly aligned cross section for a brace wire (9) having a corresponding cross section.

11. Orthodontic bracket (1) according to any one of the preceding claims, **characterized in that** the base (2) is designed such that it ensures a given torque angle and/or angulation angle for the alignment and positioning of the brace wire (9).

12. Orthodontic bracket (1) according to any one of the preceding claims, **characterized in that** the plug (12) comprises an insertion slot (14) which extends from the edge of the plug (15) to the passage (13) of the plug (12) for the brace wire (9).

13. Orthodontic bracket (1) according to claim 12, **characterized in that** the insertion slot (14) can be widened in particular elastically and/or reversibly.

14. Orthodontic bracket (1) according to claim 12 or 13, **characterized in that** the insertion slot (14) from the passage (13) to the edge of the plug (15) widens in a V shape.

15. Brace comprising orthodontic brackets (1) according to any one of the preceding claims.

## Revendications

1. Crochet orthodonthique (1) comportant une base (2) qui peut être posée sur une dent pour maintenir un fil d'appareil dentaire (9) et une fixation pour maintenir le fil d'appareil dentaire dans la base (2), **caractérisé en ce que** la fixation est un bouchon (12) constitué d'un matériau élastique, en particulier d'un matériau qui contient du caoutchouc ou du silicone, bouchon qui présente un passage (13) pour le fil d'appareil dentaire (9), et **en ce que** la base (2) présente un logement (3) muni d'un orifice de logement (6) à travers lequel le bouchon (12) peut être inséré dans le logement (3), le bouchon (12) inséré dans le logement (3) s'engrenant dans l'orifice de logement (6) par coopération de formes et le passage (13) du bouchon (12) étant entouré d'un matériau non élastique.

2. Crochet orthodontique (1) selon la revendication 1, **caractérisé en ce que** le bouchon (12) présente, pour l'insertion d'un fil d'appareil dentaire (9), une fente d'insertion (14) qui s'étend du côté externe (bord du bouchon 15) au passage (13).

3. Crochet orthodontique (1) selon l'une quelconque des revendications précédentes, **caractérisé en ce que** le bouchon (12) présente au moins deux passages (13) espacés au moins de manière sensiblement parallèle dans lesquels il est possible d'insérer au choix un fil d'appareil dentaire (9).

4. Crochet orthodontique (1) selon l'une quelconque des revendications précédentes, **caractérisé en ce que** le passage (13) du bouchon (12) présente une section transversale angulaire, en particulier rectangulaire.

5. Crochet orthodontique (1) selon l'une quelconque des revendications précédentes, **caractérisé en ce que** le bouchon (12) est réalisé à mode de disque et le passage (13) s'étend dans le sens de l'épaisseur.

6. Crochet orthodontique (1) selon l'une quelconque des revendications précédentes, **caractérisé en ce que** le bouchon (12) est réalisé à mode de disque et présente, sur sa surface circonférentielle (15) des crans pour l'engrènement dans le logement (3) de la base (2).

7. Crochet orthodontique (1) selon l'une quelconque des revendications précédentes, **caractérisé en ce que** le logement (3) comporte une fente de logement (8) pour l'insertion et l'alignement du fil d'appareil dentaire (9) et **en ce que** le passage (13) se trouvant à l'intérieur du bouchon (12), lorsque ce dernier est inséré dans le logement (3), est aligné sur la fente de logement (8) à l'intérieur du logement (3).

8. Crochet orthodontique (1) selon la revendication 7, **caractérisé en ce que** la fente de logement (8) d'insertion et d'alignement du fil d'appareil dentaire (9) est flanquée de saillies latérales (28) orientées vers l'extérieur par rapport à la base (2).

9. Crochet orthodontique (1) selon la revendication 7 ou 8, **caractérisé en ce que** se rattache à la fente de logement (8) d'insertion et d'alignement du fil d'appareil dentaire (9), au moins une tige saillante (29) orientée vers l'extérieur par rapport à la base (2) et étayant, en direction de la dent, un fil d'appareil dentaire (9) inséré dans la fente de logement (8).

10. Crochet orthodontique (1) selon l'une quelconque des revendications 7 à 9, **caractérisé en ce que** la fente de logement (8) d'insertion et d'alignement du fil d'appareil dentaire (9) présente une section transversale, orientée à l'oblique par rapport à l'orifice (6) du logement (3) de la base (2), pour un fil d'appareil dentaire (9) avec section transversale correspondante.

11. Crochet orthodontique (1) selon l'une quelconque des revendications précédentes, **caractérisé en ce que** la base (2) est réalisée de sorte qu'elle garantisse un angle de couple de torsion et/ou un angle de flexion prédéfini(s) pour l'alignement et le positionnement du fil d'appareil dentaire (9).

12. Crochet orthodontique (1) selon l'une quelconque des revendications précédentes, **caractérisé en ce que** le bouchon (12) comporte une fente d'insertion (14) qui s'étend d'un bord du bouchon (15) à un passage (13) du bouchon (12) pour le fil d'appareil dentaire (9).

13. Crochet orthodontique (1) selon la revendication 12, **caractérisé en ce que** la fente d'insertion (14) peut être élargie en particulier de manière élastique et/ou réversible.

14. Crochet orthodontique (1) selon la revendication 12 ou 13, **caractérisé en ce que** la fente d'insertion (14) est élargie en forme de V, du passage (13) au bord du bouchon (15).

15. Appareil dentaire avec crochets orthodontiques (1) selon l'une quelconque des revendications précédentes.
